# EUROPÄISCHE PATENTSCHRIFT

(11) **EP 0 302 006 B1**
(45) Veröffentlichungstag und Bekanntmachung des Hinweises auf die Patenterteilung: **05.02.1992**
(21) Anmeldenummer: 88810438.7
(22) Anmeldetag: 24.06.1988
(51) Int. Cl.: C09B 62/04, C09B 62/503, D06P 1/38

(54) **Reaktivfarbstoffe, Verfahren zu deren Herstellung und deren Verwendung**
Reactive dyes, process for their preparation and their use
Colorants réactifs, procédé pour leur préparation et leur utilisation

(30) Priorität: 03.07.1987 CH 2542/87
(43) Veröffentlichungstag der Anmeldung: 01.02.1989
(73) Patentinhaber: CIBA-GEIGY AG, 4002 Basel (CH)
(72) Erfinder: Tzikas, Athanassios, Dr., CH-4133 Pratteln (CH)

(56) Entgegenhaltungen:
- WO-A-87/01123
- DE-A- 2 001 960
- GB-A- 1 461 125

## Beschreibung

Die vorliegende Anmeldung betrifft neue verbesserte Reaktivfarbstoffe, die sich besonders für das Färben von cellulosehaltigen Fasermaterialien nach dem Ausziehverfahren oder nach Kontinueverfahren eignen, und die nass- und lichtechte Färbungen ergeben ; sowie Verfahren zur Herstellung dieser Farbstoffe, und deren Verwendung zum Färben oder Bedrucken von textilen Materialien.

Gegenstand der Erfindung sind Reaktivfarbstoffe der Formel 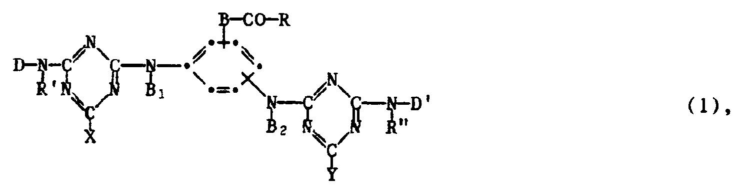 worin D und D' unabhängig voneinander je ein Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon-oder Perylentetracarbimid-Farbstoffes ; R', R", B₁ und B₂ unabhängig voneinander Wasserstoff oder Alkyl mit 1 bis 4 Kohlenstoffatomen, das durch Halogen, Hydroxy, Cyan, C₁-C₄-Alkoxy, C₁₋₄-Alkoxycarbonyl, Carboxy, Sulfamoyl, Sulfo oder Sulfato substituiert sein kann ; X und Y unabhängig voneinander Fluor, Chlor, Brom, Sulfo, C₁₋₄-Alkylsulfonyl oder Phenylsulfonyl ; B eine direkte Bindung oder ein Rest 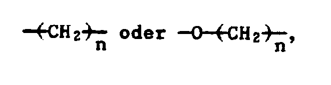 n = 1 bis 6 ; R ein Rest der Formel 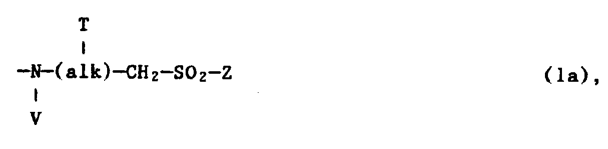 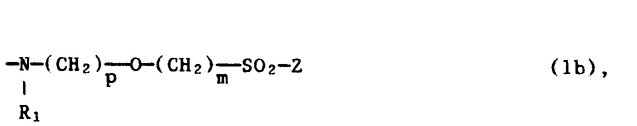 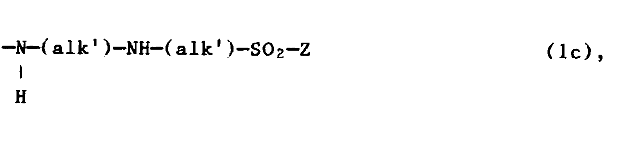 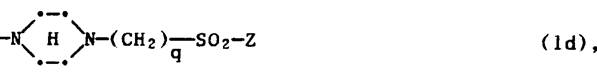 Z ß-Sulfatoäthyl, ß-Thiosulfatoäthyl, β-Phosphatoäthyl, ß-Acyloxyäthyl, ß-Halogenäthyl oder Vinyl ; alk ein Alkylenrest mit 1 bis 6 C-Atomen oderdessen verzweigte Isomere ; TWasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest―SO₂-Z, worin Z die oben angegebene Bedeutung hat;

VWasserstoff oder ein Alkylrest mit 1 bis 4 C-Atomen, der durch Carboxy- oder Sulfogruppen oder durch deren Derivate, Alkoxygruppen mit 1 oder 2 C-Atomen, Halogen oder Hydroxy substituiert sein kann ; oder ein Rest 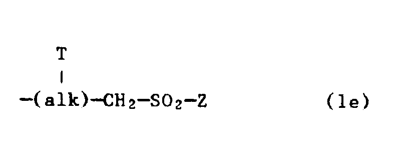 worin Z, alk und T die angegebenen Bedeutungen haben ; R₁ Wasserstoff oder C₁₋₆-Alkyl ; alk' unabhängig voneinander Polymethylenreste mit 2 bis 6 C-Atomen oder deren verzweigte Isomere ; und m = 1 bis 6, p = 1 bis 6 und q = 1 bis 6 ist.

Der Rest D bzw. D' in Formel (1) kann an seinem Grundgerüst die bei organischen Farbstoffen üblichen Substituenten gebunden enthalten.

Als Beispiele für weitere Substituenten im Rest D bzw. D' seien genannt : Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Aethylamino, Propylamino, Isopropylamino oder Butylamino, Phenylamino, N-N-Di-ß-hydroxy- äthylamino, N,N-Di-ß-sulfatoäthylamino, Sulfobenzyl amino, N,N-Disulfobenzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-(ß-Hydroxyäthyl)-sulfamoyl, N,N-Di-(ß-hydroxyäthyl)-sulfamoyl, N-Phenylsulfamoyl, Ureido, Hydroxy, Carboxy, Sulfomethyl oder Sulfo. Vorzugsweise enthält der Rest D bzw. D' eine oder mehrere Sulfonsäuregruppen. Reaktivfarbstoffe der Formel (1), worin D bzw. D' der Rest eines Azofarbstoffes ist, enthalten als Substituenten vor allem Methyl, Aethyl, Methoxy, Aethoxy, Acetylamino, Benzoylamino, Amino, Chlor, Brom, Ureido, Hydroxy, Carboxy, Sulfomethyl oder Sulfo.

Der Rest R', R", B₁ bzw. B₂ ist, falls es sich um einen Alkylrest handelt, geradkettig oder verzweigt ; er kann weitersubstituiert sein, z.B. durch Halogen, Hydroxy, Cyan, C₁₋₄-Alkoxy, C₁₋₄-Alkoxy, C₁₋₄-Alkoxycarbonyl, Carboxy, Sulfamoyl, Sulfo oder Sulfato. Also Beispiele für R', R", B₁ und B₂ seien die folgenden Reste genannt : Methyl, Aethyl, Propyl, Isopropyl, Butyl, Isobutyl, sek.-Butyl, tert.-Butyl, Carboxymethyl, ß-Carboxy- äthyl, ß-Carboxypropyl, Methoxycarbonylmethyl, Aethoxycarbonylmethyl, ß-Methoxyäthyl, ß-Aethoxyäthyl, ß-Methoxypropyl, ß-Chloräthyl, y-Brompropyl, ß-Hydroxyäthyl, ß-Hydroxybutyl, ß-Cyanäthyl, Sulfomethyl, ß-Sulfoäthyl, Aminosulfonylmethyl und ß-Sulfatoäthyl. Vorzugsweise sind R', R", B₁ und B₂ unabhängig voneinander Wasserstoff, Methyl oder Aethyl.

Die als Anionen abspaltbaren Substituenten X und Y sind je ein Halogenatom, wie Fluor, Chlor oder Brom, eine niedrigmolekulare Alkylsulfonylgruppe, wie Methylsulfonyl oder Aethylsulfonyl, der Phenylsulfonylrest oder eine Sulfogruppe. Vorzugsweise sind X und Y Fluor oder Chlor.

Der Rest B enthält 1 bis 6, vorzugsweise 1 bis 4 Kohlenstoffatome ;

Beispiele für B sind : Methylen, Aethylen, Propylen, Butylen, Methylenoxy, Aethylenoxy, Propylenoxy und Butylenoxy. Falls B einen Rest 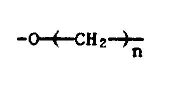 darstellt, ist B durch das Sauerstoffatom an den Benzolring gebunden. Vorzugsweise ist B eine direkte Bindung.

Als ß-Halogenäthyl kommt für Z insbesondere der ß-Chloräthylrest und als β-Acyloxyäthyl insbesondere der β-Acetoxyäthylrest in Betracht. Der Alkylenrest alk ist vorzugsweise Methylen, Aethylen, Methylmethylen, Propylen oder Butylen. Der Substituent T ist als Acyloxyrest insbesondere Acetyloxy, Propionyloxy oder Butyryloxy, und als Alkoxycarbonylrest insbesondere Methoxycarbonyl, Aethoxycarbonyl oder Propyloxycarbonyl. Falls V ein Alkylrest ist, kann dieser Methyl, Aethyl, Propyl, Isopropyl, Butyl, Isobutyl, sec-Butyl oder tert-Butyl sein. Derivate der Carboxy- oder Sulfogruppe sind z.B. Carbamoyl, N-Methyl-, N-Aethyl-, N,N-Dimethyl- und N,N-Diäthylcarbamoyl, Cyan, Acetyl, Propionyl, Butyryl, Methoxycarbonyl, Aethoxycarbonyl, Propyloxycarbonyl, Sulfamoyl, N-Methyl-, N-Aethyl-, N,N-Dimethyl- und N,N-Diäthylsulfamoyl, Methylsulfonyl, Aethylsulfonyl und Propylsulfonyl. Der Rest R₁ ist beispielsweise Methyl, Aethyl, Propyl, Isopropyl, Butyl, Isobutyl, sec-Butyl, tert- Butyl, Pentyl oder Hexyl, oder vorzugsweise Wasserstoff. Die Polymethylenreste alk' sind vorzugsweise Aethylen, Propylen oder Butylen. Die Indizes m, p und q sind unabhängig voneinander und vorzugsweise 2, 3 oder 4.

Der die beiden Farbstoffreste D und D' verbindende Mittelteil in Formel (1) ist eine reaktive Gruppierung, worin X und Y faserreaktive Abgangsgruppen darstellen, die gleich oder verschieden sein können ; vorzugsweise sind X und Y gleich. Ausserdem weist der Rest R einen Reaktivrest auf und zwar die Gruppe ―SO₂-Z; dieser Reaktivrest enthält eine Abgangsgruppe, z.B. wenn Z ß-Chloräthyl ist, oder kann nach Art von faserreaktiven Gruppen wirksam werden, z.B. wenn Z Vinyl ist (Grundlegendes über Reaktivfarbstoffe siehe Venkataraman, K. : The Chemistry of Synthetic Dyes. New York : Academic Press 1972 ; Vol VI, Reactive Dyes).

Ferner sind in Betracht zu ziehen, Reaktivfarbstoffe der Formel (1), worin der Rest D bzw. D' noch einen weiteren Reaktivrest einschliesst. Die zusätzlichen, in D bzw. D' eingeschlossenen Reaktivreste können über Aminogruppen oder in anderer Weise, z.B. durch eine direkte Bindung an D bzw. D' gebunden sein.

Ein gegebenenfalls in D oder D' eingeschlossener zusätzlicher Reaktivrest ist insbesondere ein niedrigmolekularer, durch ein abspaltbares Atom oder eine abspaltbare Gruppe substituierter Alkanoyl-oder Alkylsulfonylrest, ein niedrigmolekularer, gegebenenfalls durch ein abspaltbares Atom oder eine abspaltbare Gruppe substituierter Alkenoyl- oder Alkensulfonylrest, ein über eine Carbonyl- oder Sulfonylgruppe, durch ein abspaltbares Atom oder eine abspaltbare Gruppe substituierter carbo- oder heterocyclischer 4-, 5- oder 6-Ringe enthaltender Rest oder eine direkt über ein Kohlenstoffatom gebundener, durch ein abspaltbares Atom oder eine abspaltbare Gruppe substituierter Triazin- oder Pyrimidinrest, oder enthält einen solchen. Als Beispiele für derartige Reaktivreste seien genannt, ein über eine Aminogruppe gebundener, Halogenatome enthaltendersechsgliedriger heterocyclischer Rest, wie ein Halogentriazin- oder Halogenpyrimidinrest oder ein aliphatischer Acylrest, wie ein Halogenacetyl- oder Halogenpropionylrest.

Insbesondere ist der zusätzliche Reaktivrest ein direkt oder über ein Brückenglied gebundender Vinylsulfonyl-, β-Sulfatoäthylsulfonyl-, β-Thiosulfatoäthylsulfonyl-, β-Chloräthylsulfonyl- oder β-Acetoxyäthylsulfonyl-Rest.

Bevorzugte Ausführungsformen der Reaktivfarbstoffe der Formel (1) sind :
a) Reaktivfarbstoffe der Formel (1), worin die Reste D-N(R')- und D'N(R")- gleich sind.
b) Reaktivfarbstoffe gemäss a), worin X und Y gleich sind, und Chlor oder Fluor bedeuten.
c) Reaktivfarbstoffe gemäss b), worin R' und R" Wasserstoff, Methyl oder Aethyl sind.
d) Reaktivfarbstoffe gemäss c), worin B₁ und B₂ Wasserstoff sind.
e) Reaktivfarbstoffe gemäss d), der Formel 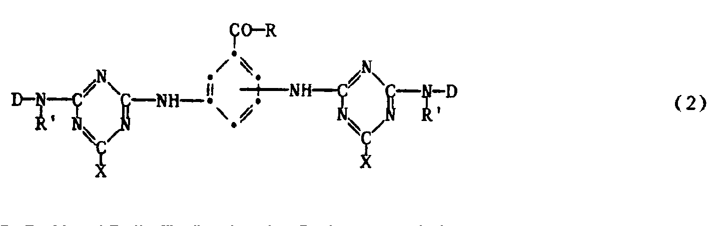 worin D, R', X und R die für d) geltenden Bedeutungen haben.
f) Reaktivfarbstoffe gemäss e), worin D der Rest eines Mono- oder Disazofarbstoffes ist.
g) Reaktivfarbstoffe gemäss e), worin D der Rest eines Metallkomplexazo- oder Formazanfarbstoffes ist.
h) Reaktivfarbstoffe gemäss f), worin D ein Mono- oder Diazofarbstoffrest der Formel 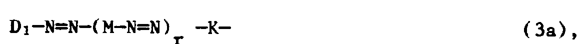 oder 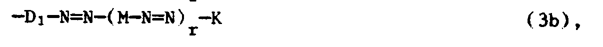 oder eines davon abgeleiteten Metallkomplexes ; D₁ der Rest einer Diazokomponente der Benzol- oder Naphthalinreihe, M der Rest einer Mittelkomponente der Benzol- oder Naphthalinreihe, und K der Rest einer Kupplungskomponente der Benzol-, Naphthalin-, Pyrazolon-, 6-Hydroxypyridon-(2)- oder Acetessigsäurearylamid-Reihe ist, wobei D_{1'} M und K bei Azofarbstoffen übliche Substituenten, insbesondere Hydroxy-, Amino-, Methyl-, Aethyl-, Methoxy- oder Aethoxygruppen, gegebenenfalls substituierte Alkanoylaminogruppen mit 2 bis 4 C-Atomen, gegebenenfalls substituierte Benzoylaminogruppen oder Halogenatome, tragen können ; r = 0 oder 1 ist ; und D₁, M und K zusammen mindestens zwei Sulfogruppen, vorzugsweise drei oder vier Sulfogruppen, enthalten.
i) Reaktivfarbstoffe gemäss g), worin D der Rest eines 1 : 1-Kupferkomplexazofarbstoffes der Benzol- oder Napthalinreihe ist, und das Kupferatom an je eine metallisierbare Gruppe beidseitig in ortho-Stellung zur Azobrücke gebunden ist.
j) Reaktivfarbstoffe gemäss g), worin D der Rest eines Formazanfarbstoffes der Formel 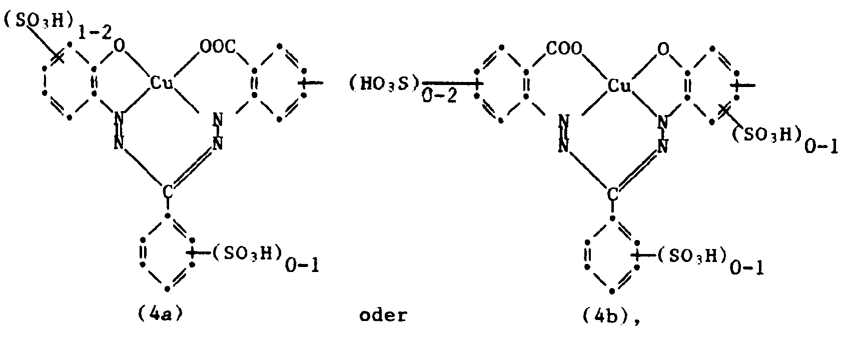 ist, worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen oder Carboxy substituiert sein können.

Bevorzugt sind insbesondere Reaktivfarbstoffe gemäss h), worin D ein Rest der folgenden Formeln (5) bis (17) ist : 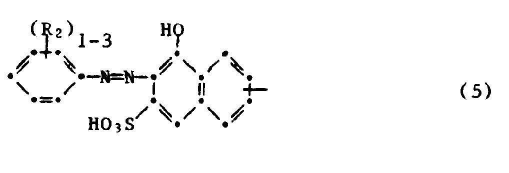 worin R₂ für 1 bis 3 Substituenten aus der Gruppe C₁₋₄-Alkyl, C₁₋₄-Alkoxy, Halogen, Carboxy und Sulfo steht. 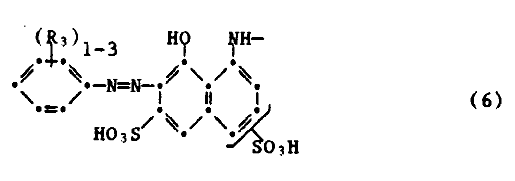 worin R₃ für 1 bis 3 Substituenten aus der Gruppe C₁₋₄-Alkyl, C₁₋₄-Alkoxy, Halogen, Carboxy und Sulfo steht. 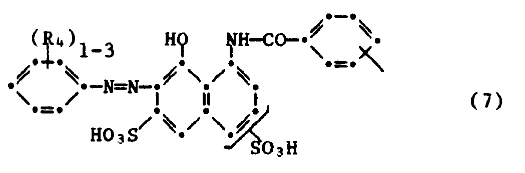 worin R₄ für 1 bis 3 Substituenten aus der Gruppe C₁₋₄-Alkyl, C₁₋₄-Alkoxy, Halogen, Carboxy und Sulfo steht. 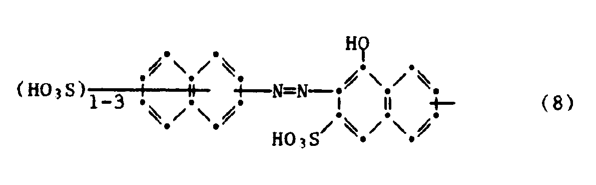 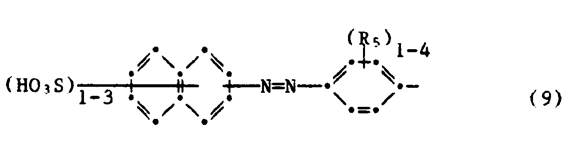 worin R₅ für 1 bis 4 Substituenten aus der Gruppe Wasserstoff, Halogen, Nitro, Cyan, Trifluormethyl, Sulfamoyl, Carbamoyl, C₁₋₄-Alkyl, C₁₋₄-Alkoxy, Amino, Acetylamino, Ureido, Hydroxy, Carboxy, Sulfomethyl und Sulfo unabhängig voneinander, steht. 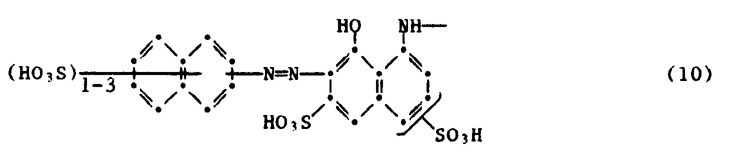 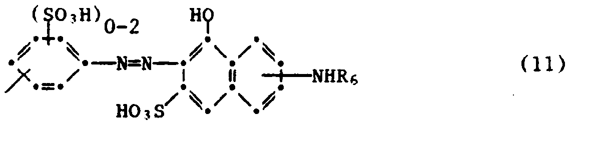 worin R₆ C₁₋₄-Alkanoyl oder Benzoyl ist. 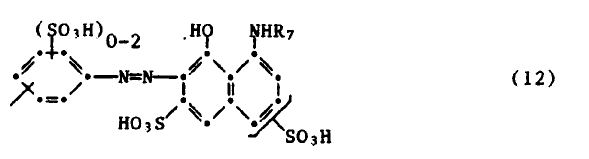 worin R₇ C₁₋₄-Alkanoyl oder Benzoyl ist. 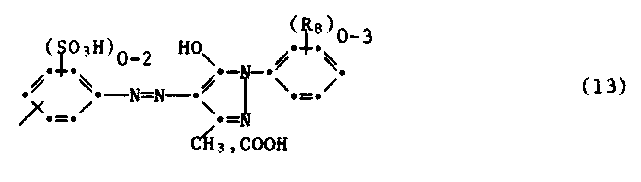 worin R₈ für 0 bis 3 Substituenten aus der Gruppe C₁₋₄-Alkyl, C₁₋₄-Alkoxy, Halogen, Carboxy und Sulfo steht. 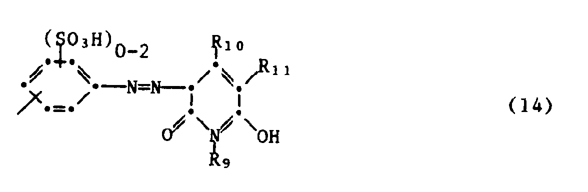 worin R₉ und R₁₀ unabhängig voneinander Wasserstoff, C₁₋₄-Alkyl oder Phenyl, und R₁₁ Wasserstoff, Cyano, Carbamoyl oder Sulfomethyl ist. 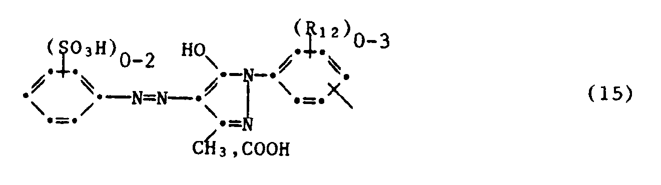 worin R₁₂ für 0 bis 3 Substituenten aus der Gruppe C₁₋₄-Alkyl, C₁₋₄-Alkoxy, Halogen, Carboxy und Sulfo steht. 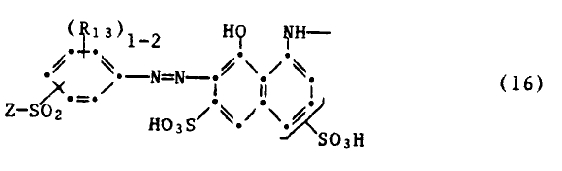 worin R₁₃ für 1 bis 2 Substituenten aus der Gruppe Wasserstoff, C₁₋₄-Alkyl, C₁₋₄-Alkoxy, Halogen, Carboxy und Sulfo steht ; und Z ß-Sulfatoäthyl, ß-Thiosulfatoäthyl, β-Phosphatoäthyl, β-Acyloxyäthyl, β-Halogenäthyl oder Vinyl ist. 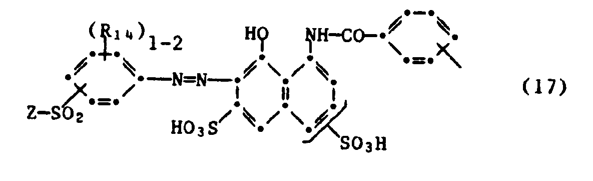 worin R₁₄ für 1 bis 2 Substituenten aus der Gruppen Wasserstoff, C₁₋₄-Alkyl, C₁₋₄-Alkoxy, Halogen, Carboxy und Sulfo steht ; und Z β-Sulfatoäthyl, β-Thiosulfatoäthyl, β-Phosphatoäthyl, β-Acyloxyäthyl, β-Halogenäthyl oder Vinyl ist.

Bevorzugt sind ferner Reaktivfarbstoffe gemäss e), worin R ein Rest der Formel 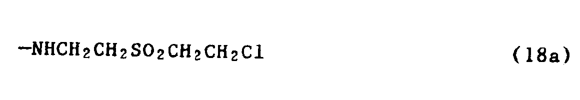 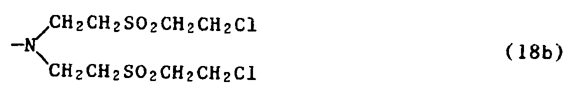 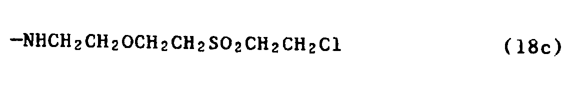 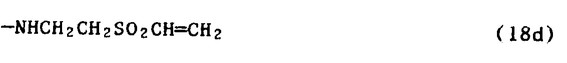 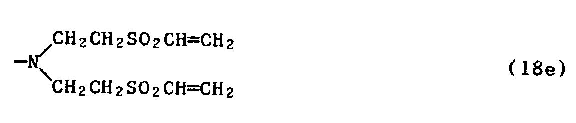 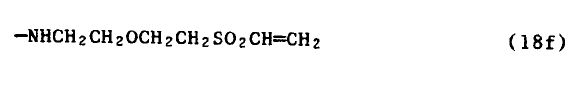 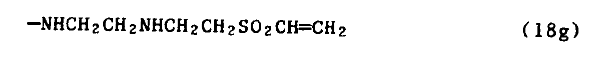 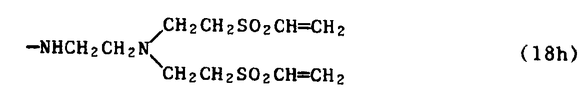 oder 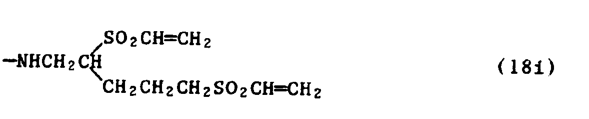 ist.

Bevorzugt sind ausserdem Schwermetallkomplexe von Reaktivfarbstoffen der Formel (1) ; als komplexbildende Schwermetalle kommen vor allem Kupfer, Nickel, Kobalt oder Chrom in Betracht.

Bevorzugt sind vor allem Reaktivfarbstoffe der Formel (1), worin Z die ß-Sulfatoäthyl-, ß-Chloräthyl- oder Vinylgruppe ist; oder worin X und Y Fluor oder Chlor ist. In Betracht zu ziehen sind insbesondere auch Kombinationen von Merkmalen gemäss der vorhergehenden Beschreibung, sofern anwendbar.

Man erhält die Reaktivfarbstoffe der Formel (1), indem man einen organischen Farbstoff der Formel 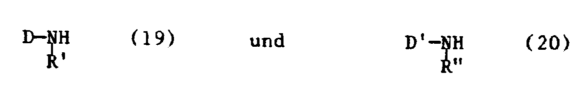 oder ein Farbstoffvorprodukt, je ein Aequivalent eines s-Triazins der Formel 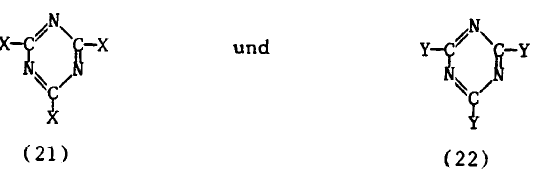 und ein Aequivalent eines Diamins der Formel 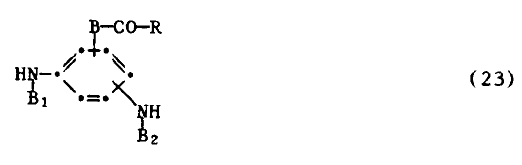 in beliebiger Folge miteinander umsetzt, wobei D, D', R', R", X, Y, B_{1'} B₂, B und R die unter Formel (1) angegebenen Bedeutungen haben, oder, im Falle der Verwendung von Farbstoffvorprodukten, die erhaltenen Zwischenprodukte in die gewünschten Monohalogentriazinfarbstoffe überführt und gegebenenfalls eine weitere Umwandlungsreaktion anschliesst.

Gegebenenfalls wird an das erfindungsgemässe Verfahren eine weitere Umwandlungsreaktion angeschlossen. Bei der Herstellung der Endfarbstoffe aus Vorprodukten handelt es sich vor allem um Kupplungen, die zu Azofarbstoffen führen.

Da die einzelnen oben angegebenen Verfahrensschritte in unterschiedlicher Reihenfolge, gegebenenfalls teilweise auch gleichzeitig, ausgeführtwerden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Ein wichtiges Verfahren ist dadurch gekennzeichnet, dass man einen Farbstoff der Formel 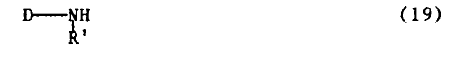 zunächst mit einem s-Triazin der Formel 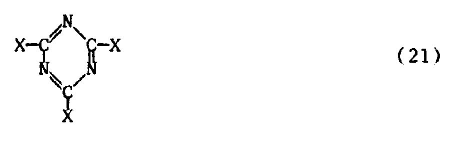 kondensiert, und die erhaltene Verbindung der Formel 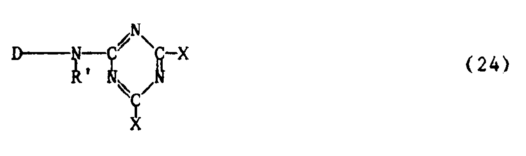 anschliessend mit einem Diamin der Formel 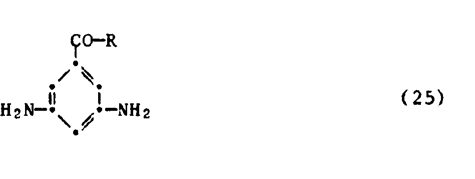 im molaren Verhältnis 2 : 1 kondensiert.

Nach einem abgeänderten Verfahren können Reaktivfarbstoffe der Formel (1) hergestellt werden, indem man eine Komponente dieses Farbstoffes, die einen Rest der Formel 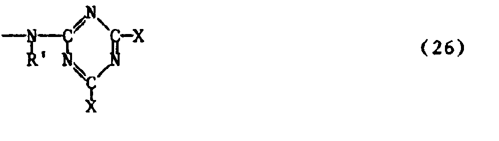 enthält, worin R' und X die angegebenen Bedeutungen haben, mit einer zur Herstellung des Farbstoffs benötigten zweiten Komponente, die gegebenenfalls einen Rest der Formel (26) enthält, umsetzt, und den so erhaltenen Farbstoff der Formel 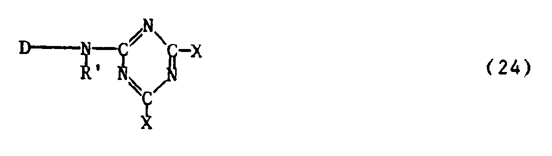 mit einem Diamin der Formel (25) im molaren Verhältnis 2 : 1 kondensiert.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Da unter bestimmten Voraussetzungen Hydrolyse eines Halogentriazinrestes eintritt, muss ein Zwischenprodukt, welches Acetylaminogruppen enthält, zwecks Abspaltung der Acetylgruppen verseift werden, bevor mit einem Halogentriazin kondensiert wird. Welche Reaktion z.B. bei der Herstellung eines sekundären Kondensationsproduktes aus einer Verbindung der Formel (23) dem Triazin der Formel (21) und dem organischen Farbstoff der Formel (19) oder einem Vorprodukt zweckmässigerweise zuerst ausgeführt wird, die des Triazins mit der Verbindung der Formel (23) oder mit dem organischen Farbstoff oder einem Vorprodukt des Farbstoffs, ist von Fall zu Fall verschieden und richtet sich vor allem nach der Löslichkeit der beteiligten Aminoverbindungen und der Basizität der zu acylierenden Aminogruppen.

Eine abgewandelte Ausführungsform des Verfahrens besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff, worin Z ein Rest HOCH₂CH_{z}- ist, herstellen und das Zwischenprodukt vor oder nach derAcytierung mit Schwefelsäure umsetzen, so dass die Hydroxygruppe in die Sulfatogruppe übergeführt wird ; oder man verwendet einen analogen Farbstoff, worin Z die Gruppe H2C=CH-- ist, und lagert an das Zwischenprodukt Thioschwefelsäure an, wobei ein Rest HO₃SS-CH₂CH₂- entsteht. Die Sulfatierung der Hydroxygruppe in einem Farbstoff der Formel (1) oder einem geeigneten Vorprodukt, erfolgt z.B. durch Umsetzung mit konzentrierter Schwefelsäure bei 0°C bis mässig erhöhter Temperatur. Die Sulfatierung kann auch durch Reaktion der Hydroxyverbindung mit zwei Aequivalenten Chlorsulfonsäure pro Hydroxygruppe in einem polaren organischen Lösungsmittel, wie beispielsweise N-Methylpyrrolidon, bei 10 bis 80°C erfolgen. Vorzugsweise erfolgt die Sulfatierung durch Eintragen der betreffenden Verbindung in Schwefelsäuremonohydrat bei Temperaturen zwischen 5 und 15°C. Die Einführung eines anderen Restes für Z in eine Verbindung der Formel (1) oder ein Zwischenprodukt anstelle eines Halogenatoms oder der Sulfatogruppe, beispielsweise einer Thiosulfato-oder Phosphatogruppe, erfolgt in an sich bekannter Weise. Der Weg der Herstellung über eine Zwischenstufe des Reaktivrestes geht in vielen Fällen einheitlich und vollständig.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit halogenwasserstoffabspaltenden Mitteln, wie Natriumhydroxid, behandeln, wobei die Sulfatoäthylsulfonylreste in Vinylsulfonylreste übergehen.

Gegebenenfalls ist eine Verfahrensvariante anwendbar, bei welcher man von Farbstoffvorprodukten ausgeht. Diese Variante ist geeignet zur Herstellung von Reaktivfarbstoffen der Formel (1), worin D der Rest eines aus zwei oder mehr als zwei Komponenten zusammengesetzten Farbstoffes ist, beispielsweise eines Monoazo-, Disazo-, Trisazo-, Metallkomplexazo-, Formazan- oder Azomethinfarbstoffes.

Grundsätzlich lassen sich die Reaktivfarbstoffe der Formel (a) sämtlicher Farbstoffklassen in an sich bekannter Weise oder analog zu bekannten Verfahrensweisen herstellen, indem man von Vorprodukten oder Zwischenprodukten für Farbstoffe, die faserreaktive Reste gemäss Formel (1) enthalten, ausgeht, oder diese faserreaktiven Reste in hierfür geeignete Zwischenprodukte mit Farbstoffcharakter einführt.

Bevorzugt sind Reaktivfarbstoffe der Formel (1), worin D der Rest eines Mono- oder Disazofarbstoffes oder eines Metallkomplexazofarbstoffes ist. In diesem Falle ist der Mittelteil von Formel (1) an eine Diazokomponente oder Kupplungskomponente von D bzw. D' gebunden, wie es in den Formeln (3a) und (3b) oben zum Ausdruck gebracht ist.

Falls man von Farbstoffvorprodukten ausgeht, gelangt man zu den Reaktivfarbstoffen der Formel (1), indem man eine Komponente des Farbstoffes der Formel (19), die eine Gruppe-N(R')H enthält, und ein Triazin der Formel (21) kondensiert, vorher oder nachher mit einer Verbindung der Formel (23) kondensiert, und mit der anderen Komponente des Farbstoffes der Formel (19) umsetzt. Sinngemäss das gleiche gilt für den Farbstoff der Formel (20) und das Triazin der Formel (22). Bei der Herstellung der bevorzugten Azofarbstoffe müssen die Diazokomponenten und die Kupplungskomponenten zusammen mindestens eine Aminogruppe -N(R')H bzw.-N(R")H, und können weitere Aminogruppen enthalten. Man verwendet in diesem Falle als Diazokomponenten vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure. Gegebenenfalls verwendet man entsprechende Acetylamino- oder Nitroverbindungen, worin die Acetylaminobzw. Nitrogruppe vor der Kondensation mit dem Triazin der Formel (21) bzw. (22) durch Verseifen bzw. Reduzieren in die H₂N-Gruppe übergeführt wird.

Liegen in den hergestellten Reaktivfarbstoffen zur Metallkomplexbildung befähigte Gruppen, wie Hydroxy, Carboxy, Amino oder Sulfo, vor, können die Reaktivfarbstoffe auch nachträglich metallisiert werden. Beispielsweise erhält man Metallkomplexazofarbstoffe, indem man erfindungsgemäss erhaltene Azoverbindungen, welche in ortho-ortho'-Stellung zur Azobrücke komplexbildende Gruppen, z.B. Hydroxy-oder Carboxygruppen, enthalten, vor oder gegebenenfalls auch nach der Kondensation mit dem Triazin der Formel (21) bzw. (22) mit schwermetallabgebenden Mitteln behandelt. Von besonderem Interesse sind Kupferkomplexe von Reaktivfarbstoffen der Formel (1). Als Methode der Metallisierung kommt ausser der oben genannten auch die entalkylierende Metallisierung und, für die Herstellung von Kupferkomplexen, die oxydative Kupferung in Betracht.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden können, einzeln genannt werden.

### Organische Farbstoffe der Formel (19) bzw. (20)

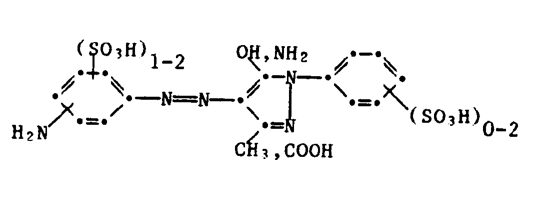

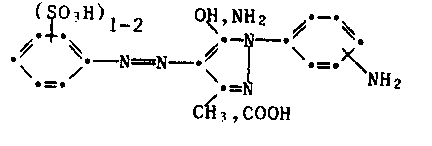

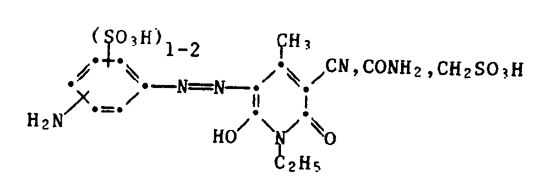

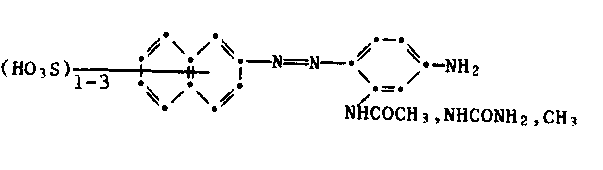

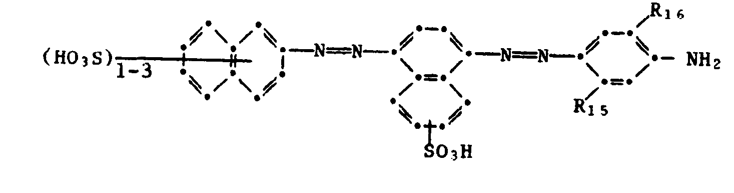

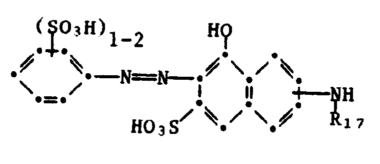

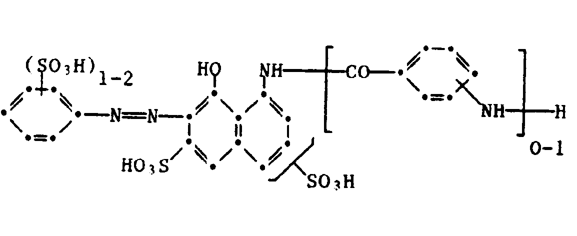

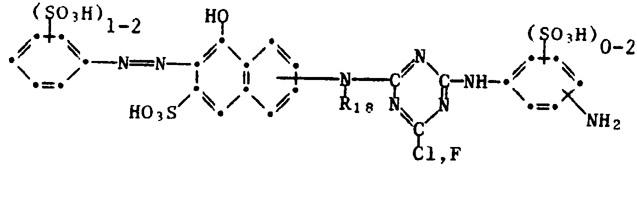

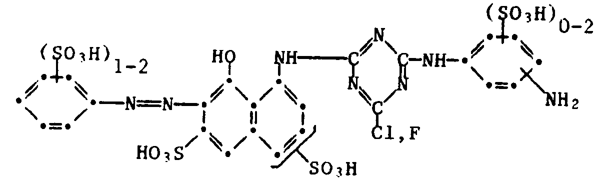

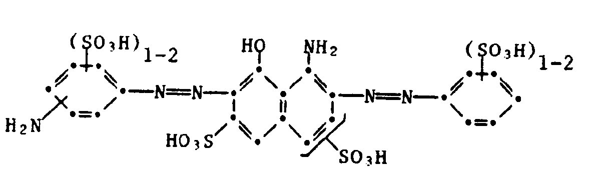

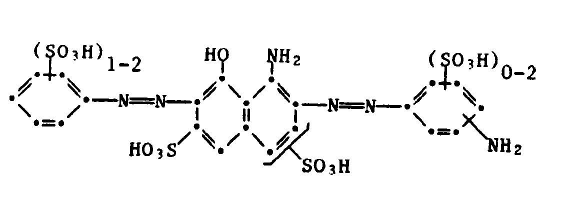

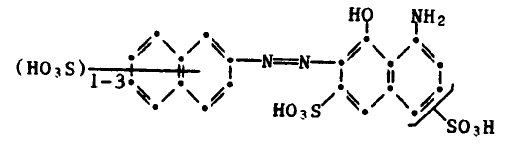

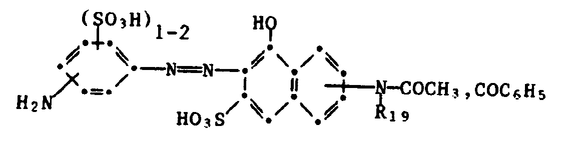

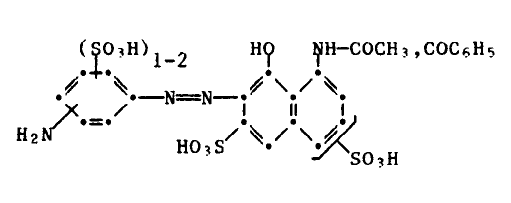

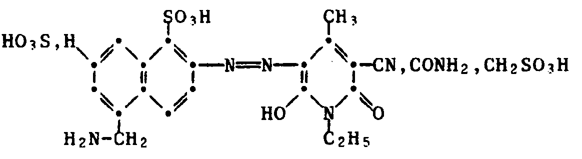

Metallkomplexe von Farbstoffen der Formeln:

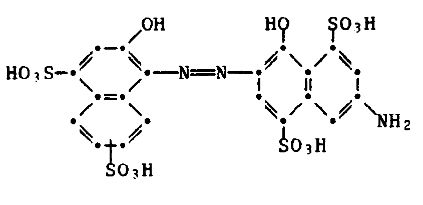

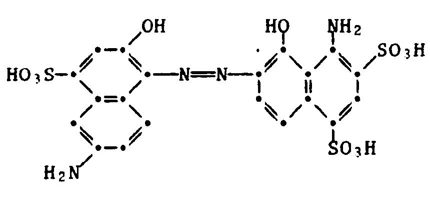

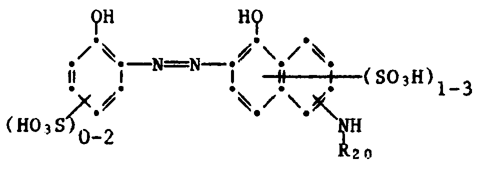

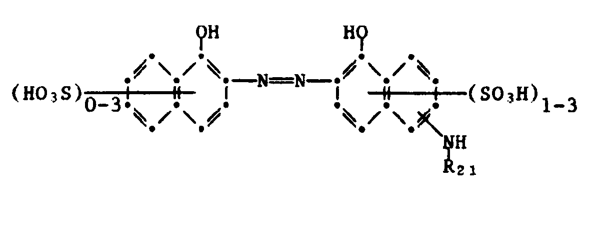

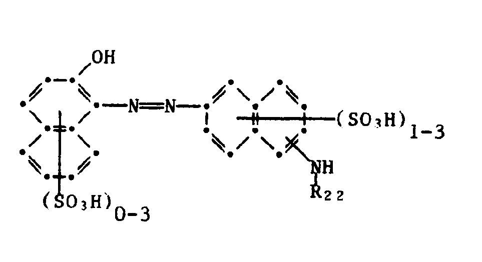

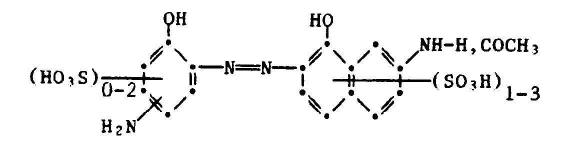

Als Metallatome sind Cu (1 : 1-Komplex) oder Cr und Co (1 : 2-Komplex) bevorzugt. Cr- und Co-Komplexe können die Azoverbindung der oben angegebenen Formel einmal oder zweimal enthalten, d.h. sie können symmetrisch oder mit beliebigen anderen Liganden unsymmetrisch aufgebaut sein.

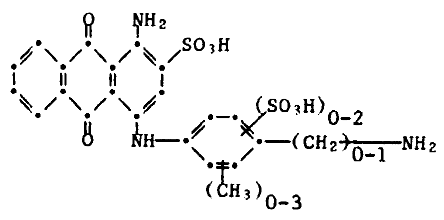

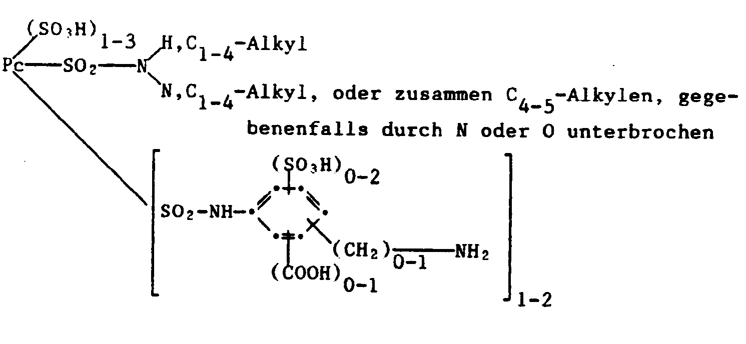

In dieser Formel steht Pc für den Cu- oder Ni-Phthalocyaninrest, die Gesamtzahl der Substituenten am Pc-Gerüst ist 4.

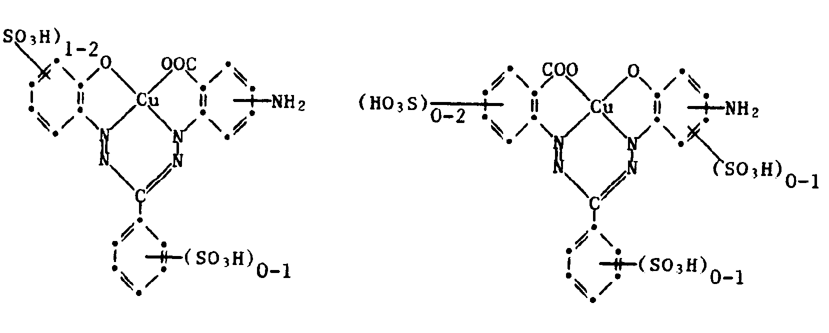

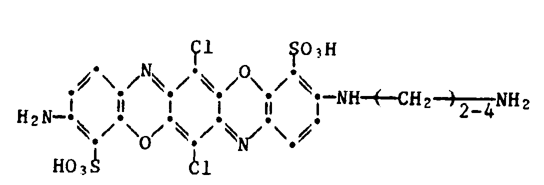

In den oben aufgeführten Formeln bedeuten die Reste R₁₇ bis R₂₃ und R₃₀ bis R₃₃ Wasserstoff oder C₁₋₄-Alkyl, und die Reste R_{15'} R₁₆ und R₂₄ bis R₂₉ Wasserstoff, C₁₋₄-Alkyl, C₁₋₄-Alkoxy, C₁₋₄-Alkanoylamino, Ureido oder Halogen, wobei die Reste R_{15'} R₁₆... etc., die zu ein und derselben Formel gehören, voneinander unabhängig sind. Vorzugsweise bedeuten die Reste R₁₇ bis R₂₃ und R₃₀ bis R₃₃ Wasserstoff, Methyl oder Aethyl, und die Reste R₁₅, R₁₆ und R₂₄ bis R₂₉ Wasserstoff, Methyl, Aethyl, Methoxy, Aethoxy, Acethylamino, Ureido oder Chlor. Die aromatischen Ringe in den obigen Farbstoffen können weitersubstituiert sein, die Benzolringe vor allem durch Methyl, Aethyl, Methoxy, Aethoxy, Methylsulfonyl, Aethylsulfonyl, Carboxy, Acetylamino oder Chlor, und die Naphthalinringe insbesondere durch Methoxy, Carboxy, Acetylamino, Nitro oder Chlor ; gleiches gilt für die Anthrachinone, Dioxazine usw. Vorzugsweise sind die Benzolringe nicht weitersubstituiert.

Als Diazo- und Kupplungskomponenten seien einzeln genannt:

### Diazokomponenten :

Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 4-Aminobiphenyl, 1-Aminobenzol-2-, -3- oder-4-carbonsäure, 2-Aminodiphenyläther, 1-Aminobenzol-2-, - 3- oder -4-sulfonsäureamid, -N-methylamid, -N-äthylamid, -N,N-dimethylamid oder-N,N-diäthylamid, Dehydrothio-p-toluidin-sulfonsäure, 1-Amino-3-trifluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methyl-benzol-3-oder-4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3-oder-4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1-Amino-3- oder-4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder 8-sulfonsäure, 1-Aminonaphthalin-3,6- oder -5,7-disulfonsäure, 2-Aminonaphthalin-1,5-, -1,7-, - 3,6-, -5,7-, -4,8- oder-6,8-disulfonsäure, 1-Aminonaphthalin-2,5,7-trisulfonsäure, 2-Aminonaphthalin-1,5,7-, - 3,6,8-oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4- acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitro- naphthalin-4-sulfonsäure, 2-Amino-1-hydroxynaphthalin-4,8-disulfonsäure, 4-Aminoazobenzol-3,4'-disulfonsäure, 3-Methoxy-4-amino-6-methylazobenzol-2',4'-disulfonsäure, 3-Methoxy-4-amino-6-methylazobenzol-2',5'-disulfonsäure, 1,4-Diaminobenzol-2,5-disulfonsäure, 1,4-Diaminobenzol-2,6-disulfonsäure, 1,3-Diaminobenzol-4,6-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethyl-benzol-6-sulfonsäure.

Wenn als Diazokomponente statt eines Diamins eine Amino-acetylaminoverbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der oben genannten Diazokomponenten in Frage, z.B. 1-Acetylamino-3-aminobenzol-4-sulfonsäure oder 1-Acetylamino-4-aminobenzol-3-sulfonsäure.

### Kupplungskomponenten

Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder-7-sulfonsäure, 2-Hydroxynaphthalin-3,6- oder-6,8-disuifon- säure, 1-Hydroxynaphthalin-4-sulfonsäure, 1-Hydroxynaphthalin-4,6- oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-4-sulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6-oder-4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Aethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -Aethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6-bzw. -4,6-disulfonsäure, 1-Acetylamino-8-hydroxynaphthalin-3,6-bzw. -4,6- disulfonsäure, 1-(4'-Aminobenzoylamino)-8-hydroxynaphthalin-3,6- bzw. -4,6-disulfonsäure, 1-(4'-Nitroben- zoyl amino)-8-hydroxynaphthalin-3,6- bzw. -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 3-Methylpyrazolon-(5), 1-Phenyl-3-methyl-5-pyrazolon, 1-(4'-Sulfophenyl)-3-methyl-5-pyrazolon, 1-(4'-Sulfophenyl)-pyrazolon-(5)-3-carbonsäure, 1-(3'-Aminophenyl)-3-methyl-5-pyrazolon, 1-(2',5'-Disulfophenyl)-3-methyl-5-pyrazolon, 1-(2'-Methyl-4'-sulfophenyl)-5-pyrazolon-3-carbonsäure, 1-(4',8'-Disulfonapht- hyl-[2'])-3-methyl-5-pyrazolon, 1-(5',7'-Disulfonaphthyl-[2'])-3-methyl-5-pyrazolon, 1-(2',5'-Dichlor-4'-sulfophenyl)-3-methyl-5-pyrazolon, 3-Aminocarbonyl-4-methyl-6-hydroxypyridion-(2), 1-Aethyl-3-cyan- oder -3-chlor-4-methyl-6-hydroxypyridon-(2), 1-Aethyl-3-sulfomethyl-4-methyl-6-hydroxypyridon-(2), 2,4,6-Triamino-3-cyanpyridin, 2-(3'-Sulfophenylamino)-4,6-diamino-3-cyanpyridin, 2-(2'-Hydroxyäthylamino)-3-cyan-4-methyl-6-aminopyridin, 2,6-Bis-(2'-hydroxyäthylamino)-3-cyan-4-methyl- pyridin, 1-Aethyl-3-carbamoyl-4-methyl-6-hydroxypyridon-(2), 1-Aethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4'-sulfophenylazo)-naphthalin-3,6-disulfonsäure, 1-Amino-8-hydroxy-2-(2',5'-disulfophenylazo)-naphthalin-3,6-disulfonsäure, 1-ß-Aminoäthyi-3-cyan-4-methyi-6-hydroxypyridon-(2), 1-y-Aminopropyl-3-sulfomethyl-4-methyl-6-hydroxypyridon-(2), 1,3-Diaminobenzoi, 1-Amino-3-N,N-di-ß- hydroxyäthylaminobenzol, 1-Amino-3-N,N-di-ß-sulfatoäthylaminobenzol, 1-Amino-3-N,N-di-ß-hydroxyäthy- lamino-4-methoxybenzol, 1-Amino-3-N,N-di-β-sulfatoäthylamino-4-methoxybenzol, 1-Amino-3-sulfo-benzylaminobenzol, 1-Amino-3-sulfo-benzylamino-4-chlorbenzol, 1-Amino-3-N,N-disuifoben- zylaminobenzol.

### Triazine der Formel (21) bzw. (22)

2,4,6-Trifluor-s-triazin (Cyanurfluorid), 2,4,6-Trichlor-2-triazin (Cyanurchlorid), 2,4,6-Tribrom-s-triazin (Cyanurbromid), 2,4,6-Trisulfo-s-triazin, 2,4,6-Tris-methylsulfonyl-s-triazin, 2,4,6-Trisphenylsulfonyl-s-triazin.

### Diamine der Formel (23)

Sie können hergestelltwerden, indem man entsprechende Dinitrocarbonsäurechloride mit Aminen der Formel 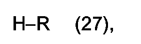 welche den Resten der Formeln (1a) bis (1d) entsprechen, kondensiert, und die Nitrogruppen zu Aminogruppen reduziert.

Die Umsetzung wird vorzugsweise in einem hochsiedenden organischen Lösungsmittel, z.B. Nitrobenzol, durchgeführt. Die Reduktion der Nitrogruppe zur Aminogruppe erfolgt in an sich bekannter Weise durch katalytische Hydrierung mit Pd/Kohlenstoff in Aethanol, Essigester oder Tetrahydrofuran bei Raumtemperatur bis etwa 40°C. Die Reduktion kann auch mit Fe/Salzsäure oder Fe/Essigsäure in wässriger Lösung durchgeführt werden.

Nach einer anderen, in der DE-OS 2040620 beschriebenen Methode kann man das Säurechlorid mit einem ungesättigten aliphatischen Amin umsetzen, und an die Doppelbindung des Säureamids 2-Mercaptoäthanol bei Temperaturen zwischen 50°C und 180°C mit Hilfe katalytischer Mengen eines Radikalbildners oder von Schwefel anlagern. Die dadurch erhaltenen Hydroxyäthylthioäther-Verbindungen können auch hergestellt werden, indem man das Säurechlorid mit einem Halogenalkylamin kondensiert, und das Kondensationsprodukt mit 2-Mercaptoäthanol und Natriumalkoholat in Alkohol erwärmt. Die Thioätherverbindungen werden dann noch zu den entsprechenden Sulfonen oxydiert.

Die Oxydation der Thioätherverbindungen zu den Sulfonen kann nach verschiedenen Methoden erfolgen, beispielsweise mit Wasserstoffperoxid mit oderohne Zusatz von Wolfram- oder Vanadinverbindungen als Katalysatoren, ferner mit Peressigsäure, Kaliumpermanganat oder Chromsäure, oder mit Chlor/Salzsäure je in wässrigem, wässrig-organischem oder organischem Medium.

Die so erhältlichen Carbonsäureamide, in denen die Gruppierung ―SO₂-Z eine β-Hydroxyäthylsulfonylgruppe darstellt, können durch Behandeln mit Sulfatierungsmitteln, Phosphorylierungsmitteln, Halogenierungsmitteln, Alkyl-oderArylsulfonsäurehalogeniden, Alkyl-oderArylcarbonsäurehalogeniden oderAlkyl- oder Arylcarbonsäureanhydriden in die entsprechenden Farbstoffvorprodukte übergeführt werden, in denen die Gruppierung ―SO₂-Z z.B. die Gruppierung ―SO₂-CH₂-CH₂-O-SO₃H, ―SO₂-CH₂-CH₂-O-PO₃H₂, ―SO₂-CH₂-CH₂-Halogen, -SO₂-CH₂-O-CO-CH₃ oder-SO₂-CH₂-CH₂-O-CO-C₆H₅ bedeutet. Die so erhaltenen Produkte können ihrerseits durch Behandeln mit alkalisch wirkenden Mitteln, wie beispielsweise Alkalihydroxid oder Alkalicarbonat, wie Natriumhydroxyd oder Natriumcarbonat, in entsprechende Verbindungen überge-führt werden, in denen die Gruppierung-SO₂-Z die Gruppierung-SO₂-CH=CH₂ bedeutet. Die so erhaltenen Produkte können wiederum durch Umsetzung (Addition) mit Salzen der Thioschwefelsäure, wie Natriumthiosulfat, in Verbindungen übergeführt werden, in denen die Gruppierung -SO₂-Z die Gruppierung -S0₂-CH₂-CH₂-S-SO₃H bedeutet.

Geeignete Sulfatierungsmittel sind hierbei beispielsweise konzentrierte Schwefelsäure sowie Chlorsulfonsäure und Amidosulfonsäure oder andere Schwefeltrioxid abgebende Verbindungen. Geeignete Phosphorylierungsmittel sind hierbei beispielsweise konzentrierte Phosphorsäure, Pyro-, Meta- oder Polyphosphorsäure, Polyphosphorsäurealkylester, Phosphoroxichlorid oder Gemische aus Phosphorsäure und Phosphor-(V)-oxid. Als Halogenierungsmittel können beispielsweise Thionylchlorid oder Thionylbromid verwendet werden.

Bevorzugt sind Verbindungen der Formel 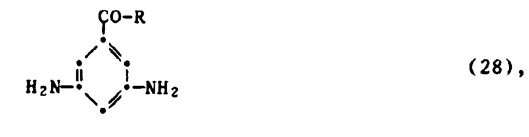 worin R ein Rest der Formel 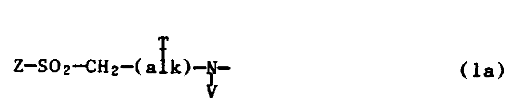 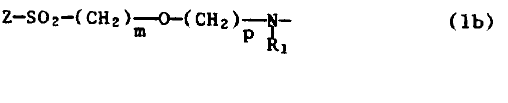 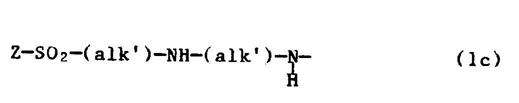 oder 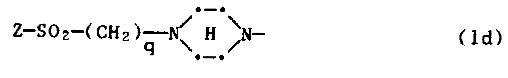 ist; und Z, alk, T, V, R_{1'} alk', m, p und q die unter Formel (1) angegebenen Bedeutungen haben.

Das bevorzugte Verfahren zur Herstellung der Verbindungen der Formel (28) ist dadurch gekennzeichnet, dass man eine Verbindung der Formel 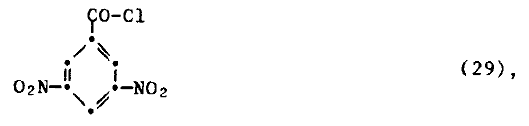 mit einem Amin der Formel 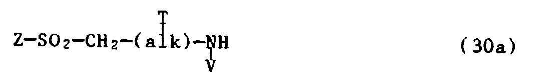 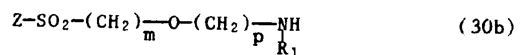 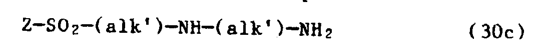 oder 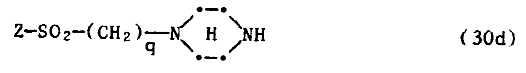 kondensiert, und die Nitrogruppen zu Aminogruppen reduziert.

Nach einer Abänderung des oben beschriebenen Verfahrens können Verbindungen der Formel (28) auch in der Weise hergestellt werden, dass man eine Verbindung der Formel (29) mit einem Amin der Formel 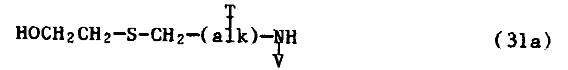 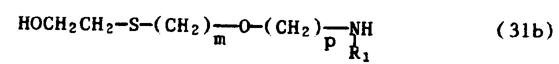 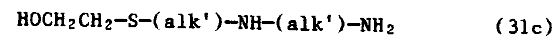 oder 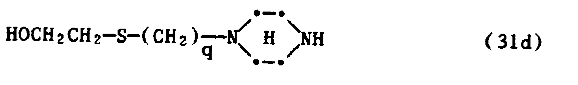 kondensiert, das Kondensationsprodukt mit elementarem Chlor zu der entsprechenden β-Chloräthylsulfonyl-Verbindung oxydiert, und die Nitrogruppen zu Aminogruppen reduziert.

Ferner ist noch eine andere Verfahrensvariante anwendbar, wonach man zuerst eine Verbindung der Formel (29) mit einem derAmine der Formeln (31a) bis (31 d) kondensiert, das erhaltene Produkt mit einem Peroxid zum Sulfon oxydiert, dann die Nitrogruppe zur Aminogruppe reduziert, die erhaltene Aminoverbindung mit einem s-Triazin der Formel (21) bzw. (22) oder einer Verbindung der Formel (23) kondensiert, und zuletzt die Hydroxygruppe in dem Rest von einem der Amine der Formeln (31a) bis (31d) sulfatiert.

Die Kondensation der Verbindung der Formel (29) mit den Aminen der Formeln (31a) bis (31d) wird z.B. in Chloroform bei Raumtemperatur und in Gegenwart von Alkalischen, säurebindenden Mitteln, z.B. Alkalihydroxiden, -carbonaten oder-bicarbonaten, durchgeführt. Anschliessend wird das Kondensationsprodukt in an sich bekannter Weise mit einer Chlor/Salzsäure-Mischung oxydiert. Die Reduktion der Nitrogruppe zur Aminogruppe erfolgt wie oben beschrieben.

Die als Ausgangsverbindungen verwendeten Amine der Formeln (30a) bis (31d) können analog dem Verfahren des Beispiels 1 der DE-OS 2614550 hergestellt werden.

### Amine der Formel (27)

β-(β'-Chloräthylsulfonyl)-äthylamin,
β-[β'-(β"-Chloräthylsulfonyl)-äthyloxy]-äthylamin,
y-(ß'-Chloräthylsulfonyl)-propylamin,
Bis-[ß-(ß'-chloräthylsulfonyl)-äthyl]-amin,
Bis-[y-(ß'-chloräthylsulfonyl)-propyl]-amin,
β-(Vinylsulfonyl)-äthylamin,
Bis-[ß-(vinylsulfonyl)-äthyl]-amin,
δ-(β'-Chloräthylsulfonyl)-butylamin,
β-(β'-Sulfatoäthylsulfonyl)-äthylamin,
B is-[ß-(ß'-sulfatoäthylsulfonyl)-äthyl]-amin,
N-(y-Vinylsulfonyl-propyl)piperazin,
β-(β'-Vinylsulfonyl-äthylamino)-äthylamin,
N-(ß-Vinylsulfonyl-äthyl)piperazin,
β-(β'-Vinylsulfonyl-äthyloxy)-äthylamin,
β-[β'-(β"-Chloräthylsulfonyl)-äthylamino]-äthylamin,
ß-[ß'-(ß"-Sulfatoäthylsulfonyl)-a'-methyl-äthylamino]-äthylamin,
ß-[ß'-(ß"-Sulfatoäthylsulfonyl)-a'-methyl-äthylamino]-ß-methyläthylamin,
y-[ß'-(ß"-Sulfatoäthylsulfonyl)-a'-methyl-äthylamino]-propylamin,
ä-[β'-(β"-Sulfatoäthylsulfonyl)-α'-methyl-äthylamino]-n-butylamin,
a-Carbonsäure-ß-(ß'-chloräthylsulfonyl)-äthylamin,
a-Carbonsäureäthylester-ß-(ß'-chloräthylsulfonyl)-äthylamin,
β-Hydroxy-γ-(β'-chloräthylsulfonyl)-propylamin,
β,γ-(Bis-β'-chloräthylsulfonyl)-propylamin,
β-Acetoxy-γ-(β'-acetoxyäthylsulfonyl)-propylamin,
β-Chlor-γ-(β'-chloräthylsulfonyl)-propylamin,
β-Sulfato-γ-(β'-sulfatoäthylsulfonyl)-propylamin,
Bis-[ß-hydroxy-y-(ß'-chloräthylsulfonyl)-propyl]-amin,
Bis-[ß-chlor-y-(ß'-chloräthylsulfonyl)-propyl]-amin,
Bis-[ß-sulfato-y-(ß'-sulfatoäthylsulfonyl)-propyl]-amin,
β-Hydroxy-γ-(β'-vinylsulfonyl)-propylamin,
4-(ß-Chloräthylsulfonyl)-cyclohexylamin,
4-(ß-Sulfatoäthylsulfonyl)-cyclohexylamin,
4-Vinylsulfonylpiperidin,
4-(ß-Chloräthylsulfonyl)-piperidin,
2-[ß-(ß'-Chloräthylsulfonyl)äthyl]-piperidin,
2-(ß-Sulfatoäthylsulfonyl)methylpiperidin,
N-[y-(ß'-Chloräthylsulfonyl)propyl]-piperazin,
y-[y'-(ß"-Chloräthylsulfonyl)propyloxy]-propylamin,
β-[Bis-(β'-vinylsulfonyl-äthyl)amino]-äthylamin,
(ß,s-Bis-vinylsulfonyl)-n-pentylamin
   sowie gegebenenfalls weitere Verbindungen, worin die β-Chloräthylsulfonyl-Gruppe durch β-Sulfatoäthylsulfonyl oder Vinylsulfonyl ersetzt ist, oder worin die β-Chloräthylsulfonyl-, β-Sulfatoäthylsulfonyl- oder Vinvylsulfonyl-Gruppe durch β-Hydroxyäthyl ersetzt ist.

Die Kondensation des s-Triazins der Formel (21) bzw. (22), insbesondere eines 2,4,6-Trihalogen-s-triazins mit den organischen Farbstoffen der Formeln (19) und (20) bzw. den eine Gruppe -N(R')H bzw. -N(R")H enthaltenden diazotierbaren und/oder kupplungsfähigen Komponenten erfolgt vorzugsweise in wässriger Lösung oder Suspension, beiniedrigen Temperaturen, vorzugsweise zwischen 0° und 5°C und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert. Für die weitere Umsetzung der so erhaltenen Halogentriazinfarbstoffe bzw. für die Umsetzung des 2,4,6-Trihalogen-s-triazins mit den Verbindungen der Formel (23) setzt man die freien Amine oder deren Salze, bevorzugt in Form des Hydrochlorids, ein. Die Umsetzung wird bei Temperaturen etwa zwischen 0 und 40°, bevorzugt zwischen 5 und 25°C, unter Zusatz säurebindender Mittel, bevorzugt Natriumcarbonat, in einem pH-Bereich von 2 bis 8 bevorzugt 5 bis 6,5, durchgeführt.

Die Kondensation des Halogentriazins mit einer Verbindung der Formel (23) kann vor oder nach der Kondensation des Halogentriazins mit einem Farbstoff der Formel (19) bzw. (20)geschehen. Die Kondensation des Halogentriazins mit einer Verbindung der Formel (23) erfolgt vorzugsweise in wässriger Lösung oder Suspension, beiniedriger Temperatur und bei schwach saurem bis neutralem pH-Wert. Auch hier wird der bei der Kondensation freiwerdende Halogenwasserstoff vorteilhafterweise durch laufende Zugabe von wässrigen Alkalihydroxiden, -carbonaten oder-bicarbonaten neutralisiert.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyamidfasern, oder insbesondere Polyesterfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Falls die Reaktivfarbstoffe der Formel (1), worin D der Rest eines Anthrachinonfarbstoffes ist, eine ungenügende Löslichkeit in der alkalischen Färbeflotte aufweisen, kann dieser Mangel in der aus der Literatur bekannten Weise durch Zusatz von Dispergatoren oder anderen nichtfarbigen Verbindungen z.B. ein Naphthalinsulfonsäure-Formaldehyd-Kondensat oder insbesondere Anthrachinon-2-sulfonsäure, behoben werden.

Die Reaktivfarbstoffe der Formel (1) zeichnen sich durch hohe Reaktivität, gutes Fixiervermögen und ein sehr gutes Aufbauvermögen aus. Sie können daher nach dem Ausziehfärbeverfahren beiniedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbeund Schweissechtheiten, sowie eine gute Plissierechtheit, Bügelechtheit und Reibechtheit.

Aus der DE-A-2001960 sind ähnliche Farbstoffe bekannt, die sich von den erfindungsgemässen Farbstoffen in charakteristischer Weise durch das Fehlen des -B-CO-R Reaktivrestes unterscheiden.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

### Beispiel 1 :

46,7 Teile des Monoazofarbstoffes, den man durch Kuppeln von diazotierter p-Aminobenzoesäure auf 1-Amino-8-naphthol-3,6-disulfonsäure in alkalischem Medium erhält, werden in Form des Natriumsalzes in 600 Teilen Wasser gelöst und in eine eiskalte Suspension von 18,5 Teilen Cyanurchlorid gegeben. Das Gemisch wird zwischen 0 und 5° gerührt und durch allmähliche Zugabe einer verdünnten Natriumhydroxydlösung neutralisiert. Nach beendeter Kondensation lässt man eine Lösung von 18,5 Teilen der Verbindung der Formel 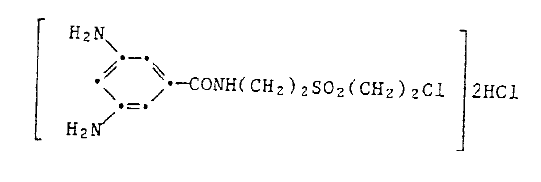 in 100 Teilen Wasser zufliessen und rührt die Mischung eine Stunde zwischen 30-40°C, wobei durch Zutropfen von Natriumhydroxydlösung der pH-Wert zwischen 5 und 7 gehalten wird. Nach beendeter Kondensation wird der pH-Wert mit Natriumcarbonat auf 8 gestellt und der Disazofarbstoff durch Zugabe von Aceton gefällt, abfiltriert und getrocknet.

Der erhaltene Disazofarbstoff der Formel 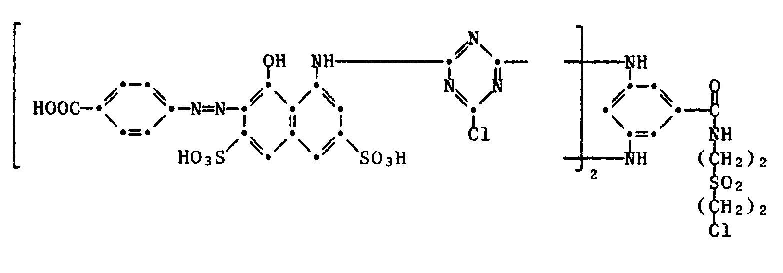 färbt Cellulosefasern nach dem Ausziehverfahren in Gegenwart von Elektrolyten aus alkalischem Bad in farbstarken, reinen blaustichig roten Tönen.

### Beispiel 2 :

18,5 Teile Cyanurchlorid werden in 110 Teilen Aceton gelöst und unter kräftigem Rühren auf 250 Teile Eis gegeben. Dazu lässt man eine Lösung von 55,3 Teilen des Farbstoffs der folgenden Konstitution 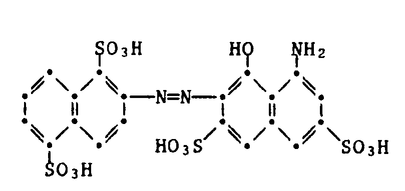 bei 0° hinzufliessen. Anschliessend werden 50 Teile 2-normale Sodalösung zugetropft, wobei sich ein pH-Wert von 6-6,5 ergibt. Nun kommen 23 Teile der Verbindung der Formel 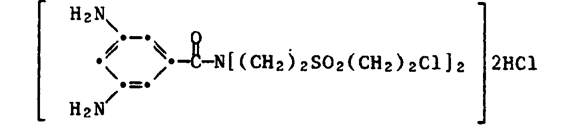 als Pulver hinzu. Man erwärmt in 1/2 Stunde auf40°C und hält diese Temperatur 3 Stunden. Gleichzeitig werden 100 Teile 2-normale Sodalösung bei einem pH-Wertvon 6,0-6,5 zugetropft. ZurAbscheidung gibt man 20% Kaliumchlorid hinzu, lässt unter Rühren auf 20-25° abkühlen und filtriert. Man erhält etwa 235 Teile Farbstoffpaste, die bei 50-55° im Vakuum getrocknet werden. Der hergestellte Reaktivfarbstoff hat folgende Konstitution :

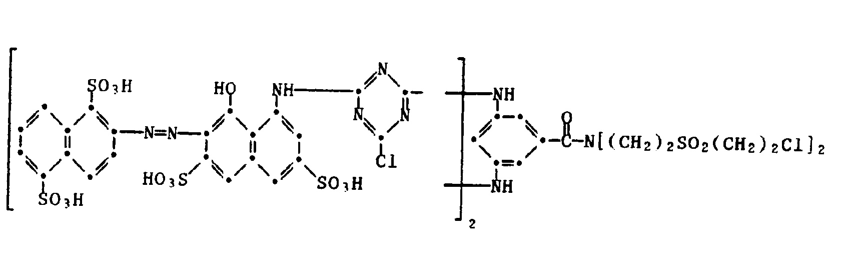

Er färbt Cellulosefasern nach dem Ausziehverfahren in echten kräftigen roten Tönen.

### Beispiel 3 :

18,5 Teile Cyanurchlorid werden in 110 Teilen Aceton gelöst und unter kräftigem Rühren auf 250 Teile Eis gegeben. Dazu lässt man eine Lösung von 55,3 Teilen des Farbstoffs der folgenden Konstitution : 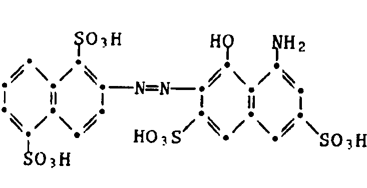 bei 0° hinzufliessen. Anschliessend werden 50 Teile 2-normale Sodalösung zugetropft, wobei sich ein pH-Wert von 6-6,5 ergibt. Nun kommen 18,5 Teile der Verbindung der Formel 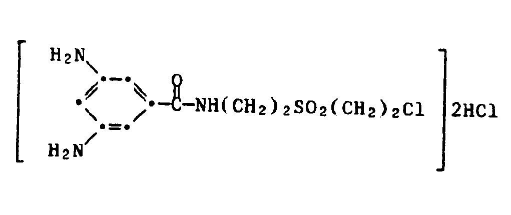 als Pulver hinzu. Man erwärmt in 1/2 Stunde auf 40° und hält diese Temperatur 3 Stunden. Gleichzeitig werden 100 Teile 2-normale Sodalösung bei einem pH-Wert von 4,0-6,0 zugetropft. Zur Abscheidung gibt man 20% Kaliumchlorid hinzu, lässt unter Rühren auf 20-25° abkühlen und filtriert. Man erhält etwa 235 Teile Farbstoffpaste, die bei 50-55° im Vakuum getocknetwerden. Der hergestellte Reaktivfarbstoff hatfolgende Konstitution:

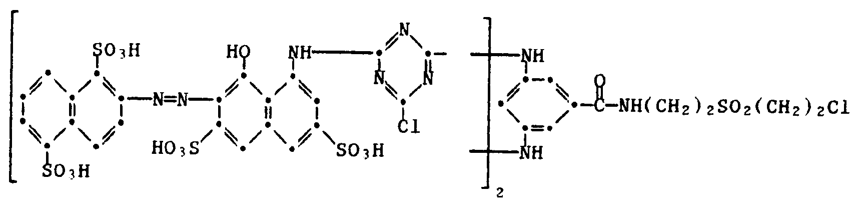

Er färbt Cellulosefasern nach dem Ausziehverfahren in echten kräftigen roten Tönen.

### Beispiel 4 :

63,1 Teile 1-[2'-Sulfo-4'-(4",6"-dichlor-l",3",5"-triazin-2"-yl-amino)-phenyl]-4-(2"^{L}sulfophenylazo)-pyrazolon-(5)-3-carbonsäure, werden in Wasser bei pH 6,8-7,2 gelöst. Zu dieser Lösung gibt man bei etwa 25° 18,5 Teile der Verbindung der Formel 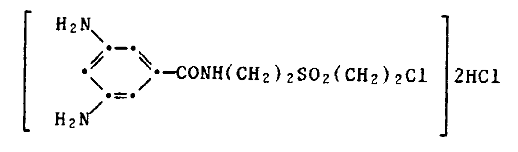 und erwärmt auf 35-40°. Der pH beginnt zu fallen. Wenn er einen Wert von etwa 3,5 erreicht hat, wird er durch portionsweise Zugabe von ca. 11 g Soda in einem Bereich von 3,5-4,5 gehalten. Die Reaktion ist nach etwa 3 Stunden beendet, was man daran erkennt, dass kein weiteres Alkali mehr verbraucht wird. Die Farbstofflösung wird jetzt durch Zugabe von Dinatriumhydrogenphosphat auf 7,0 gestellt. Der erhaltene Farbstoff der Konstitution : 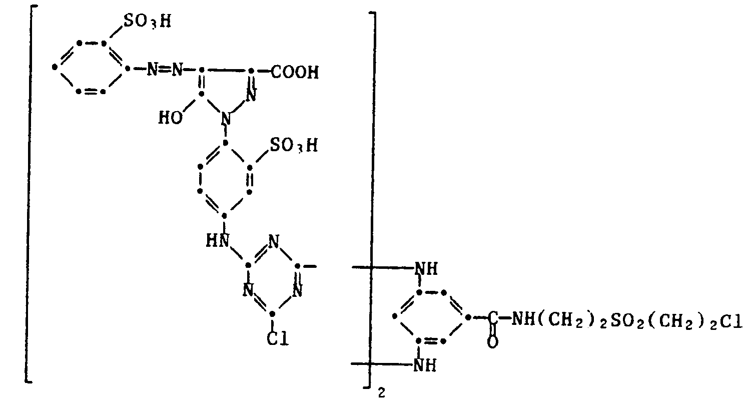 kann durch Aussalzen oder Sprühtrocknen isoliert werden. Er färbt Cellulosefasern in reinen grünstichigen, gelben Tönen.

### Beispiel 5 :

54,5 Teile des Farbstoffes 2-(4'-Amino-2'-ureido-phenylazo)-naphthalin-3,6,8-trisulfonsäure werden mit 250 Teilen Wasser neutral gelöst. Diese neutrale Lösung gibt man zu einer hergestellten Suspension von 18,5 Teilen Cyanurchlorid in Aceton und Wasser. Duruch Kühlung mit Eis hält man die Temperatur bei 0° bis 3°. Im Verlauf der Acylierungsreaktion werden 9 g Bicarbonat so eingetragen, dass der pH zwischen 5,5 und 7 bleibt. Wenn kein Ausgangsfarbstoff mehr im Chromatogramm nachweisbar ist, gibt man 14 Teile 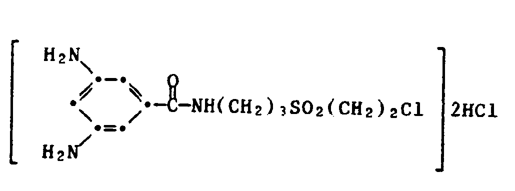 in 200 Teilen Wasser zu und erwärmt auf 30°. Durch Zugabe von weiteren 18 g Bicarbonat hält man den pH-Wert in den Grenzen von 6,5 bis 7,0. Die Reaktion ist beendet, wenn kein weiteres Alkali mehr verbraucht wird. Der entstandene Farbstoff der Formel : 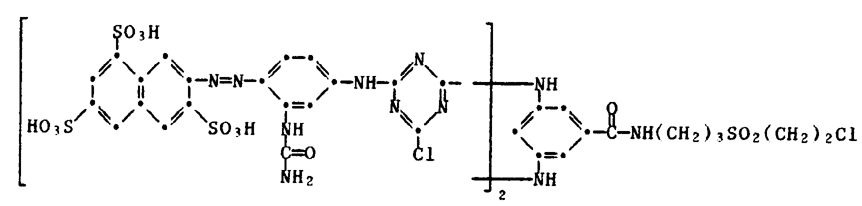 wird durch Zugabe von Kochsalz abgeschieden und im Vakuum bei 50 bis 55° getrocknet. Er färbt Cellulosefasern nach dem Ausziehverfahren in farbstarken, reinen goldgelben Tönen.

### Beispiel 6 :

50,3 Teile des Farbstoffs 2-Amino-5-hydroxy-6-(2',5'-disulfophenylazo)-naphthalin-7-sulfonsäure werden in 800 ml Wasser neutral gelöst und die Lösung auf 0⁰ bis 5° abgekühlt. Bei dieser Temperatur werden 14 Teile Cyanurfluorid zugegeben, wobei der pH der Reaktionslösung durch gleichzeitige Zugabe von 2n Natriumhydroxidlösung bei 6-6,5 gehalten wird. Nach Zusatz von 21,0 Teilen der Verbindung der Formel 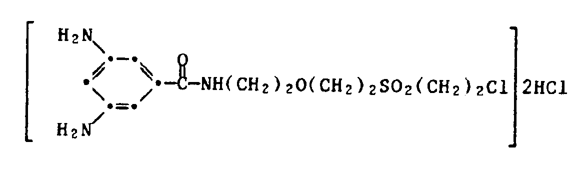 in 100 ml Wasser wird die Temperatur auf 20 bis 25°C erhöht und der pH bei 5,5-6,5 gehalten. Reaktionsdauer ca. 4 Stunden.

Zur Abscheidung des Farbstoffes wird die neutrale Lösung mit 10% Natriumchlorid und 10% Kaliumchlorid versetzt und filtriert. Die erhaltene Paste wird im Vakuum bei 40 bis 50° getrocknet. Der so hergestellte Reaktivfarbstoff hat die folgende Konstitution :

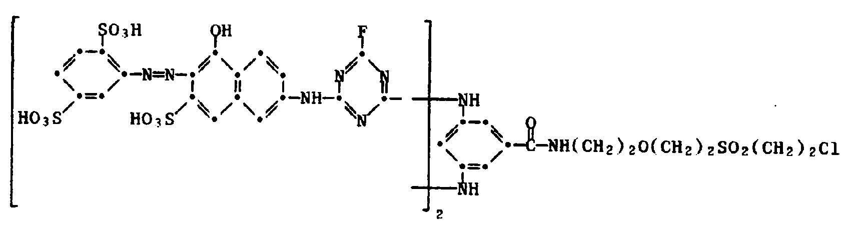

Er färbt Cellulosefasern nach dem Ausziehverfahren in farbstarken, reinen orangen Tönen.

### Beispiel 7 :

31,9 Teile 1,8-Aminonaphthol-3,6-disulfonsäure werden unter Zusatz von Natriumhydroxyd neutral gelöst, und die Lösung wird zu einer eiskalten wässrigen Suspension von 18,5 Teilen Cyanurchlorid gegeben. Die Mischung wird 2 Stunden zwischen 0° und 5° gerührt und mit einer verdünnten Natriumhydroxydlösung so neutralisiert, dass die Reaktion stets schwach sauer gegen Kongopapier bleibt. Nach beendeter Kondensation fügt man eine aus 13,7 Teilen Orthanilsäure in üblicher Weise hergestellte Diazolösung hinzu. Im Laufe von 1 bis 2 Stunden werden etwa 50 Vol.-Teile 2n Natriumhydroxydlösung zugetropft. Nach beendeter Kupplung fügt man eine Lösung von 18,5 Teilen der Verbindung der Formel 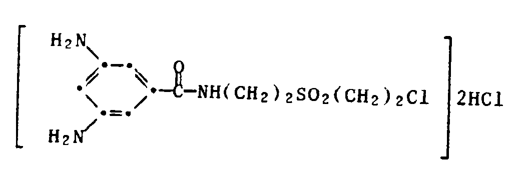 in 100 Teilen Wasser hinzu, erwärmt auf 35° und hält 2 Stunden bei dieser Temperatur. Durch allmähliche Zugabe einer verdünnten Natriumhydroxydlösung wird das Reaktionsgemisch neutralisiert. Der entstandene Bis-Chlortriazinylaminofarbstoff wird ausgesalzen, abfiltriert und getrocknet. Der Farbstoff kann auch durch Zugabe von Aceton oder Alkohol gefällt werden.

Die Konstitution ist folgende :

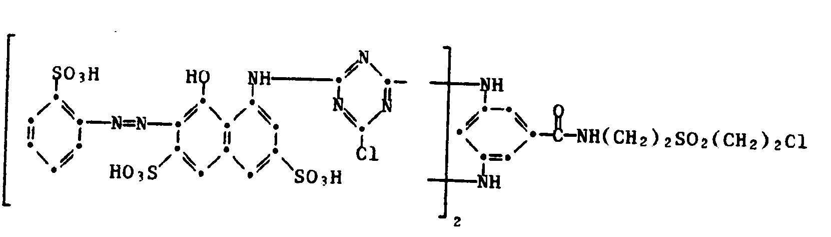

Er färbt Cellulosefasern in echten reinen gelbstichigen, roten Tönen.

### Beispiel 8 :

Gemäss den Angaben in Beispiel 2 werden 31,9 Teile 1,8-Aminonaphthol-3,6-disulfonsäure mit 18,5 Teilen Cyanurchlorid kondensiert. Zur erhaltenen Lösung des primären Kondensationsproduktes gibt man innert 10 Minuten eine wässrige Lösung von 18,5 Teilen der Verbindung der Formel 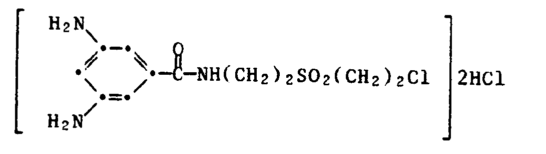 erwärmt allmählich auf 30° und lässt innert 1 Stunde etwa 50 Vol.-Teile 2n Natriumhydroxydlösung in der Weise zutropfen, dass der pH-Wert 6 nicht überschritten wird. Nach beendeter Kondensation gibt man eine Lösung von 20 Teilen wasserfreiem Natriumcarbonat und anschliessend bei 5-10° die Diazolösung aus 22,4 Teilen 4-β-Sulfatoäthylsulfonylanilin hinzu. Nach beendeter Kupplung wird der Farbstoff durch Zugabe von Aceton oder Alkohol gefällt, abfiltriert und getrocknet.

Der erhaltene Disazofarbstoff der Formel 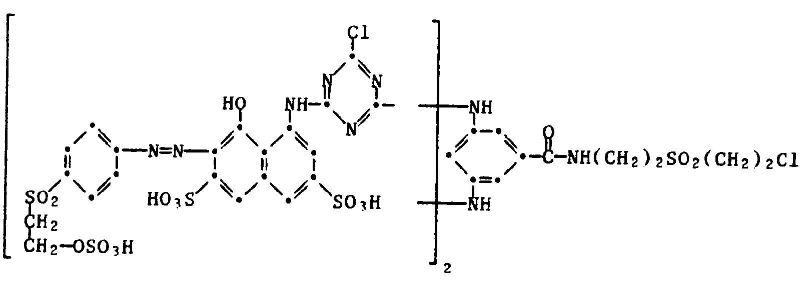 färbt Cellulosefasern nach dem Ausziehverfahren in sehr farbstarken, roten Tönen.

Analog zu den in den Beispielen 1 bis 8 beschriebenen Verfahren können auch die in der folgenden Tabelle aufgeführten Farbstoffe der Nrn. 9 bis 25 hergestellt werden. Die Farbstoffe färben Cellulosefasern in den in der dritten Spalte angegebenen Tönen.

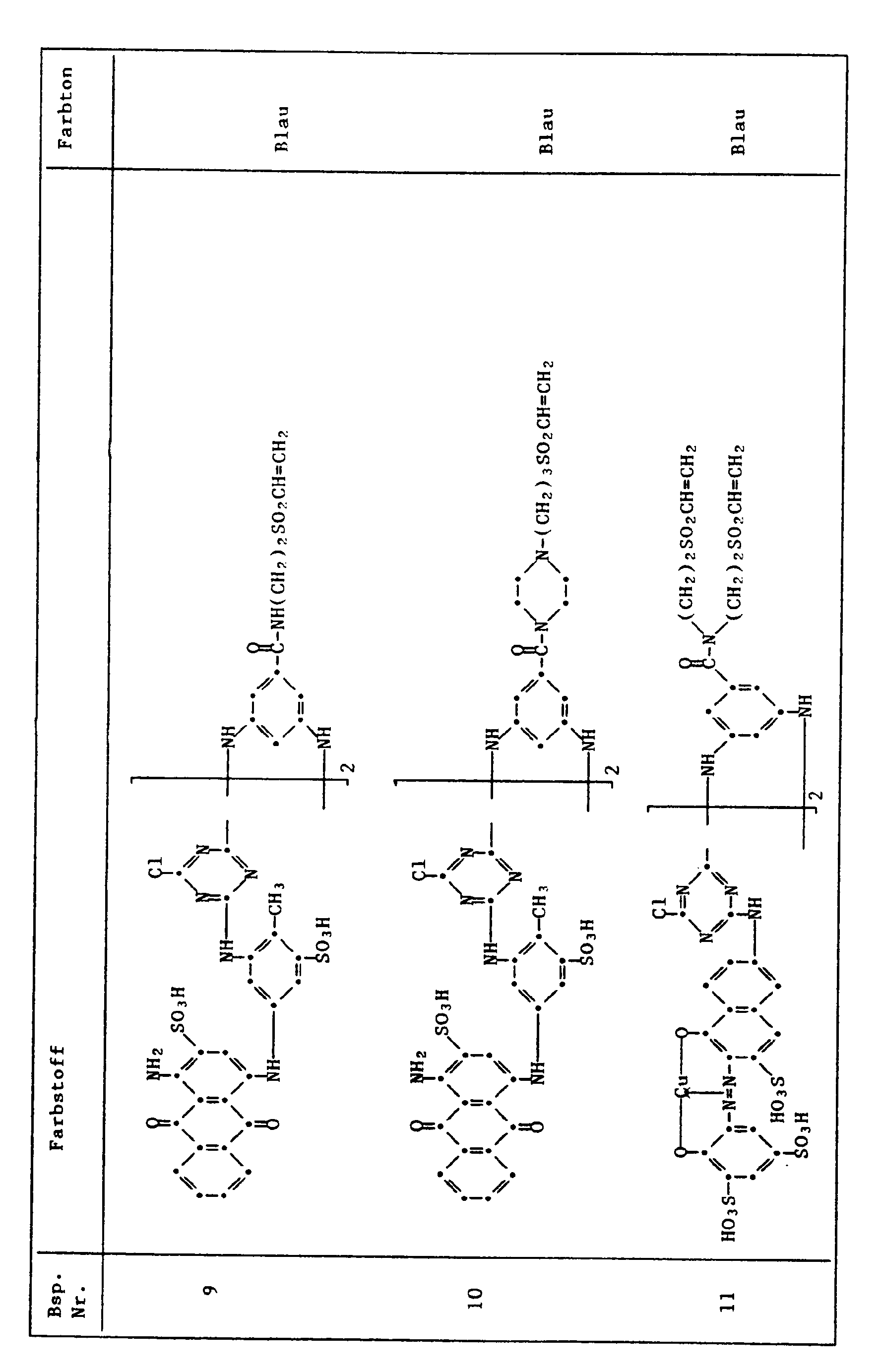

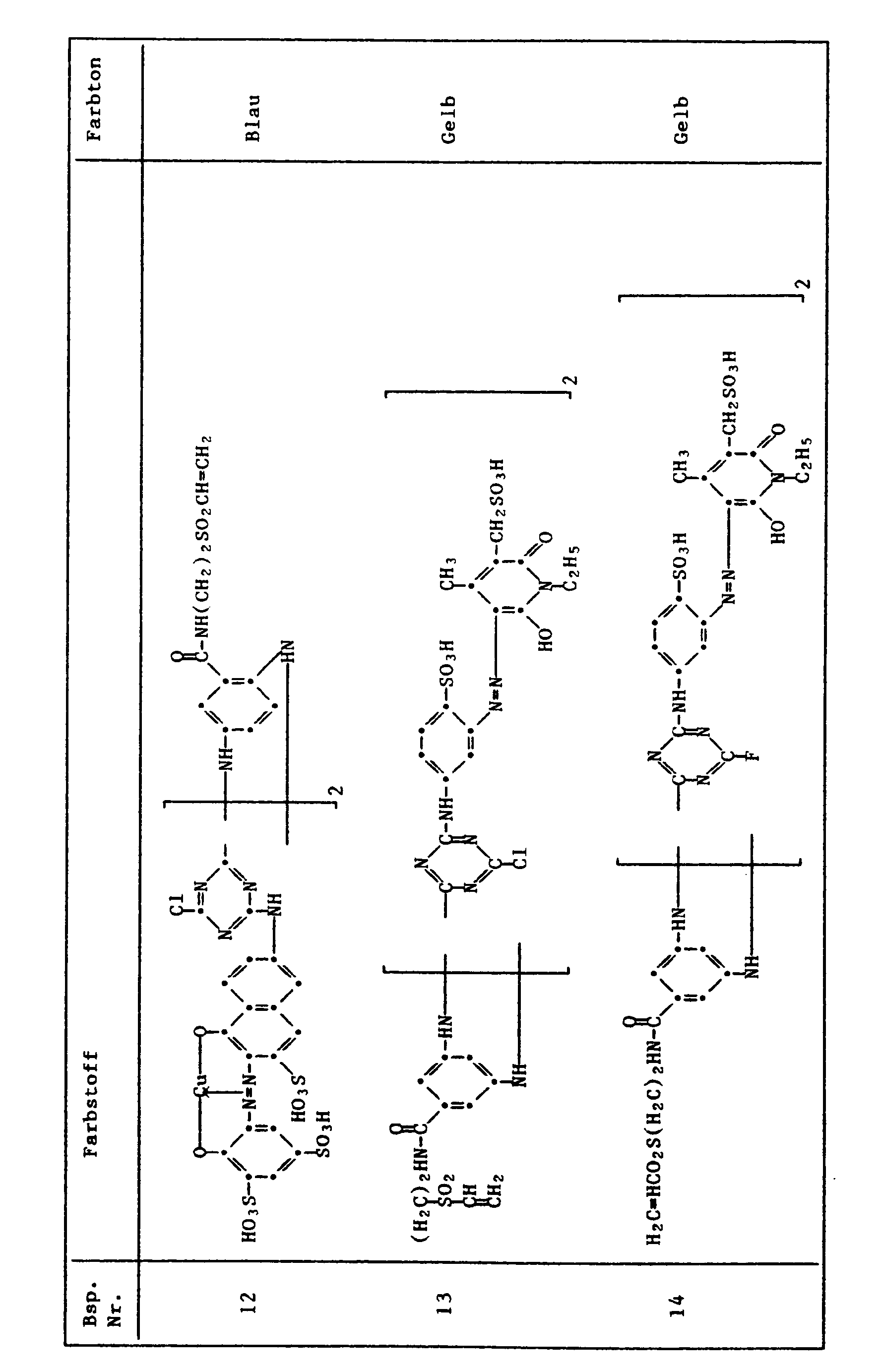

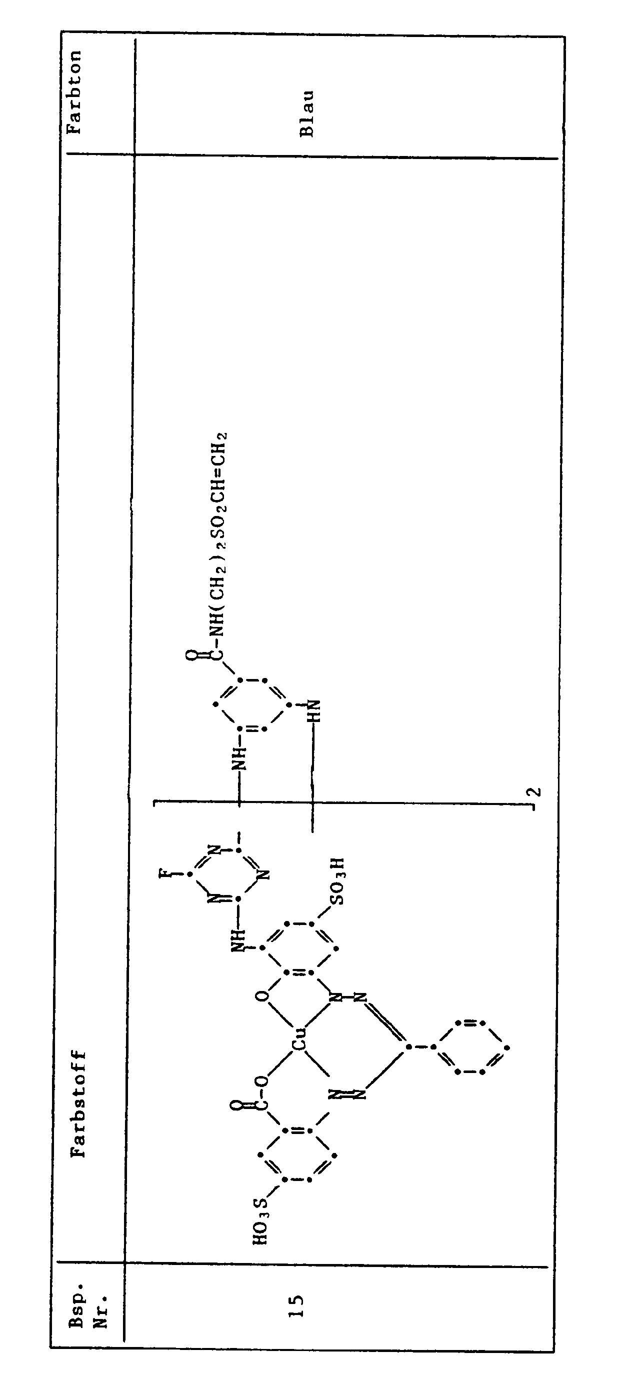

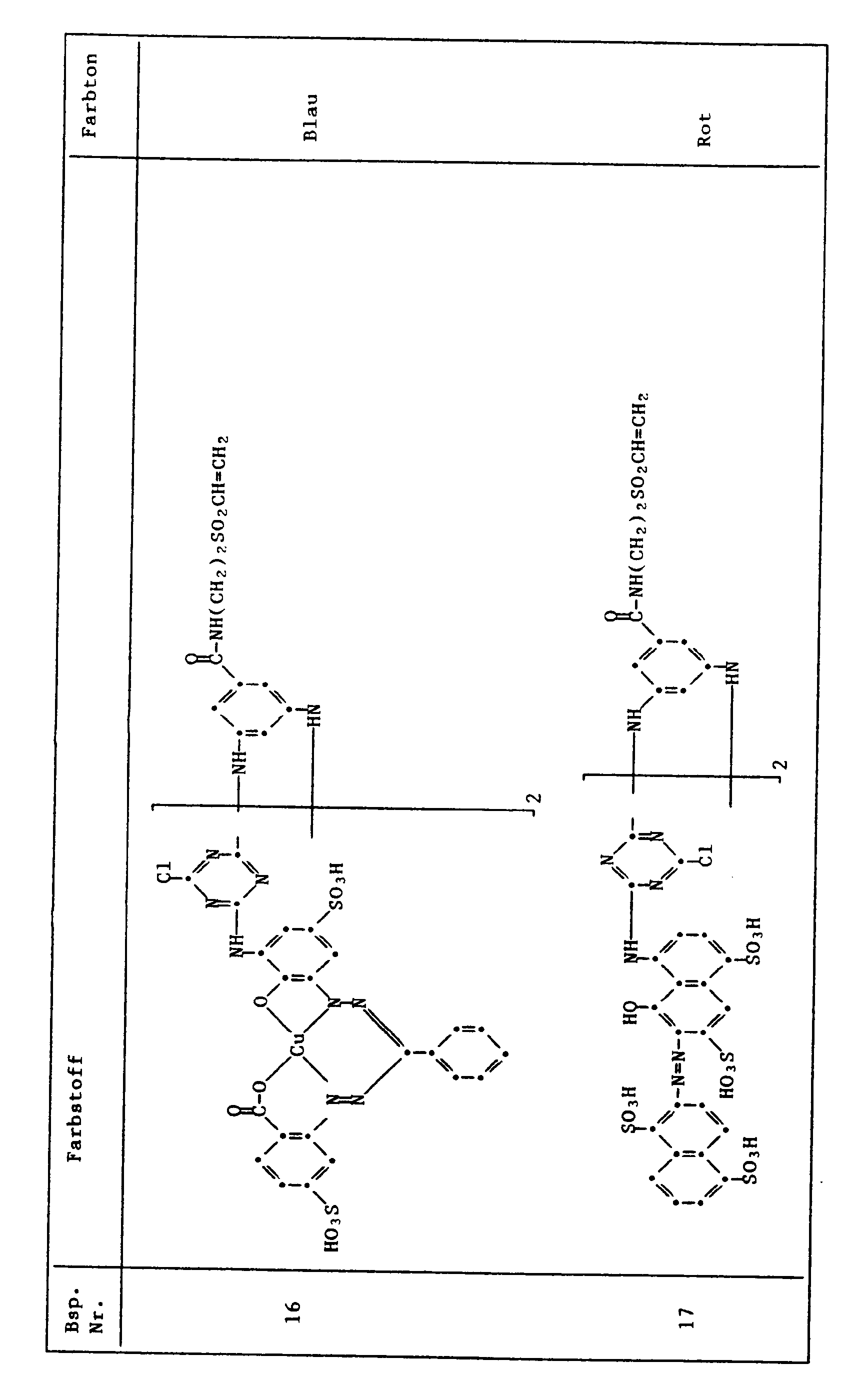

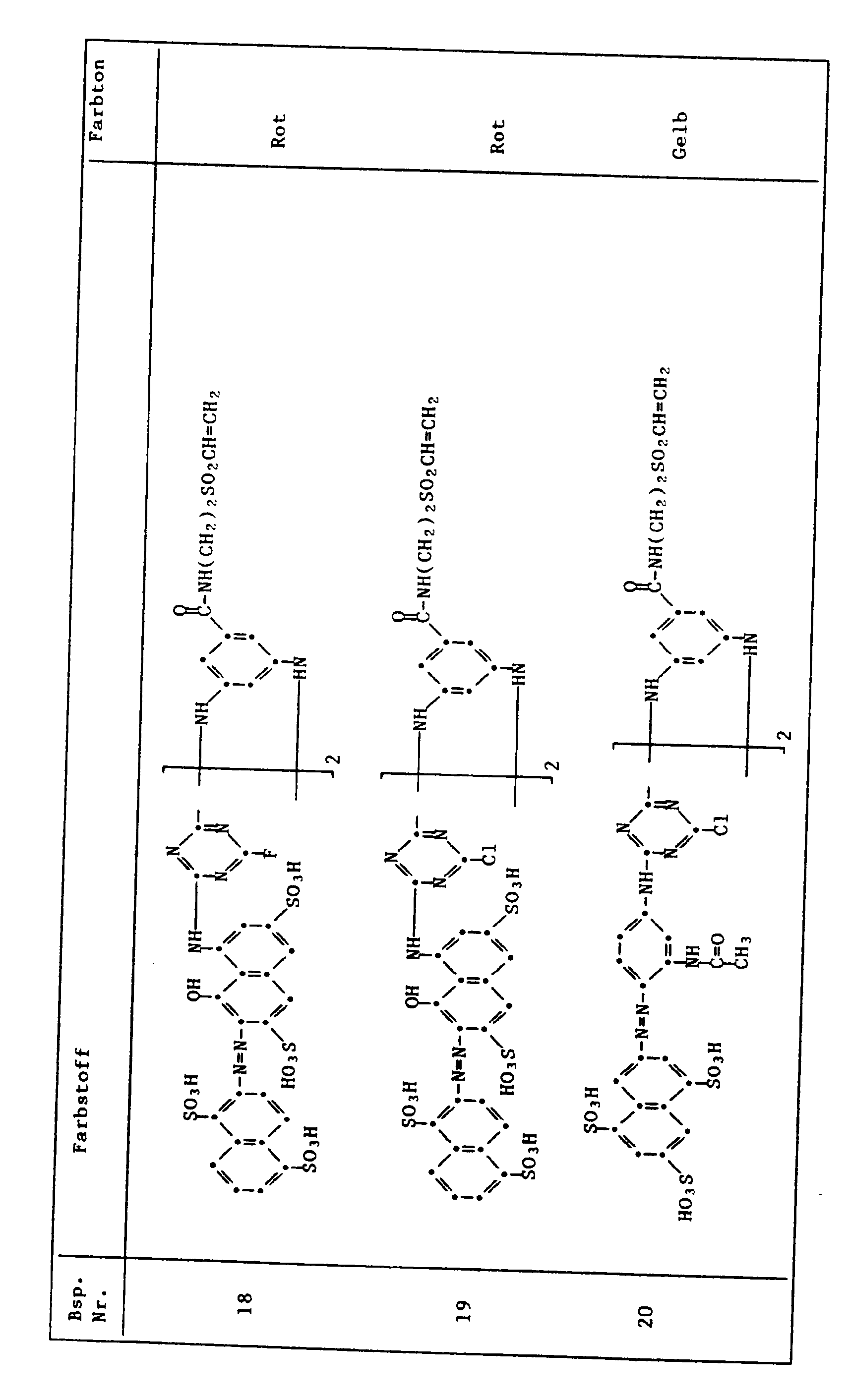

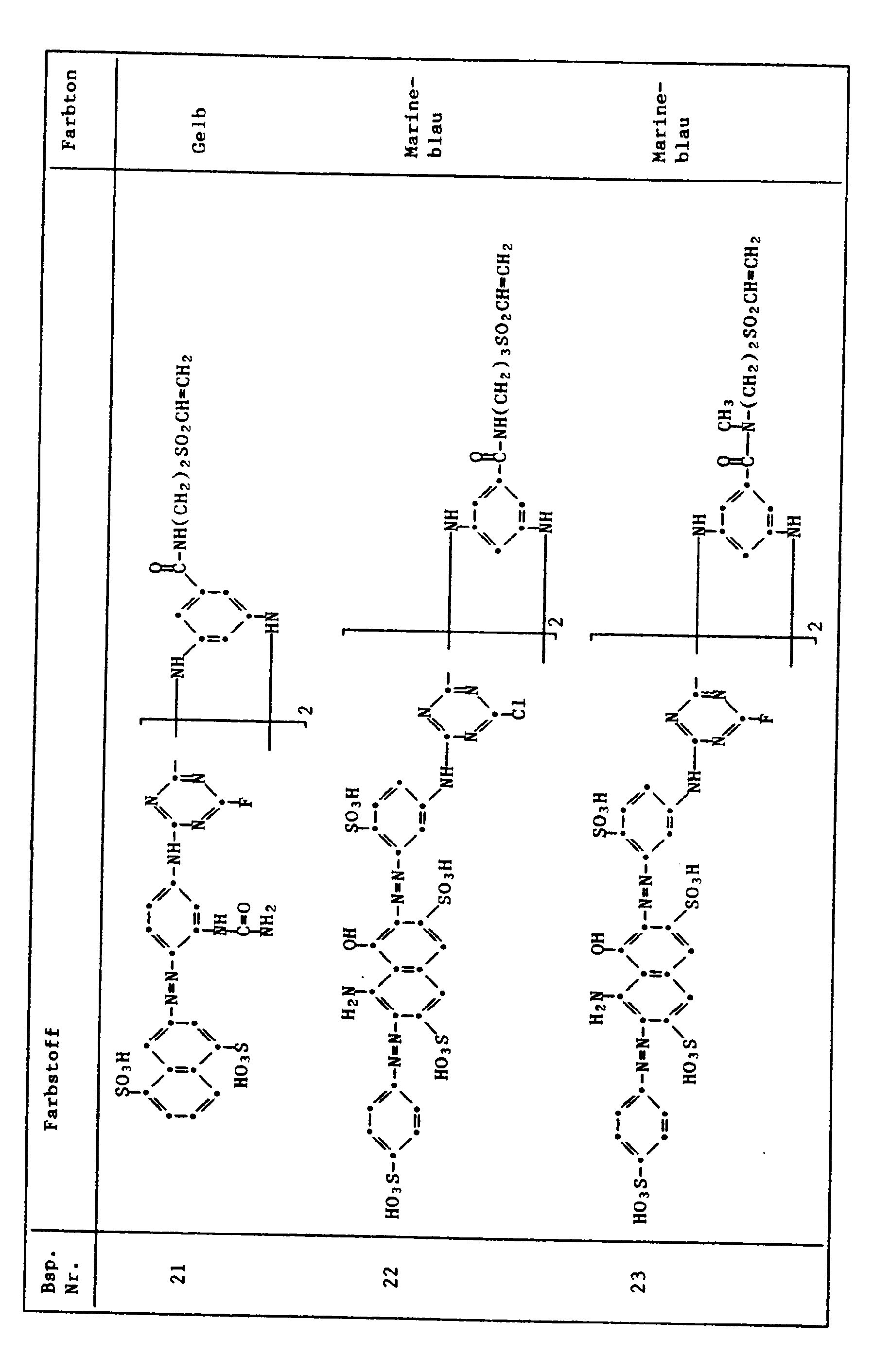

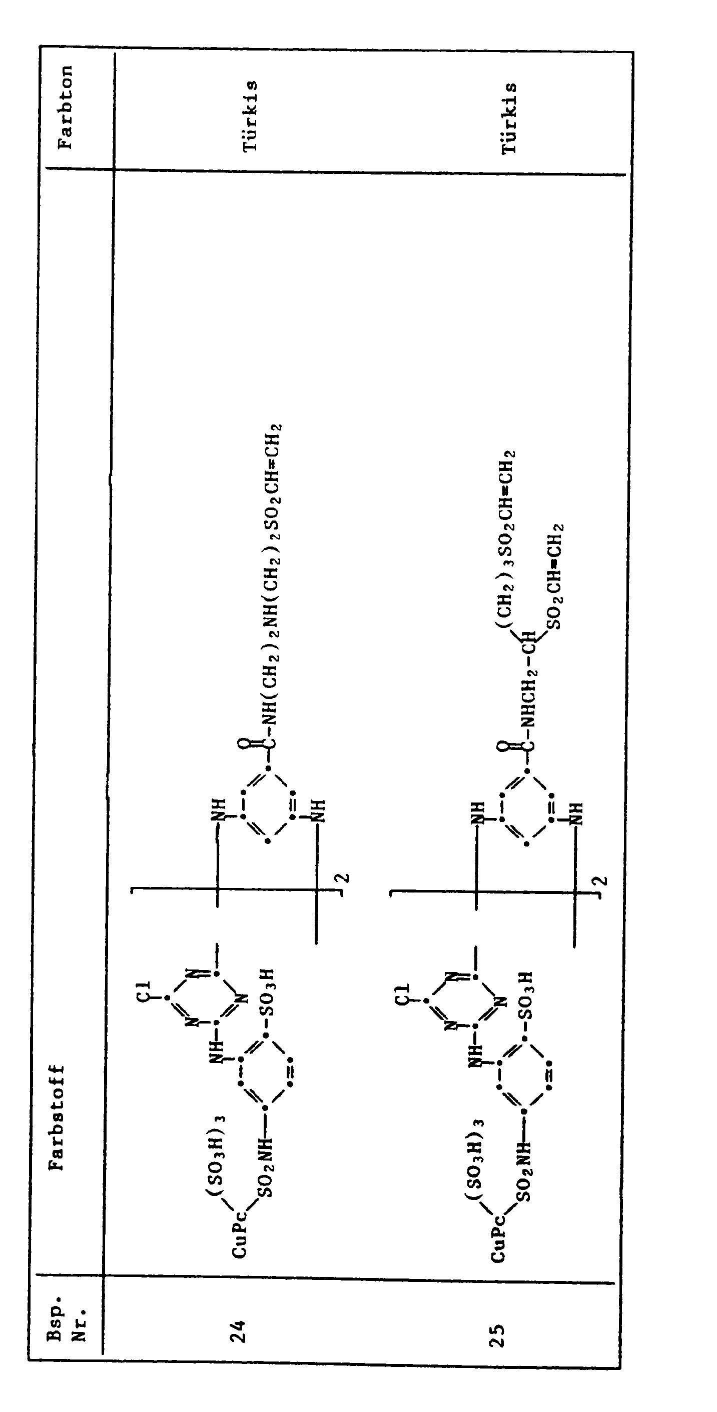

### Färbevorschrift 1

2 Teile des gemäss Beispiel 1 erhaltenen Farbstoffes werden in 400 Teilen Wasser gelöst ; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g kalzinierte Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

### Färbevorschrift 11

2 Teile des gemäss Beispiel 1 erhaltenen Reaktivfarbstoffes werden in 400 Teilen Wasser gelöst ; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

### Färbevorschrift 111

8 Teile des gemäss Beispiel 1 erhaltenen Reaktivfarbstoffes werden in 400 Teilen Wasser gelöst ; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

### Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°Be) enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit dererhaltenen Lösung wird ein Baumwollgewebe imprägniert, so dass es um 75% seines Gewichtes zunimmt, und dann getrocknet. Dann imprägniert man des Gewebe mit einer 20°C warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

### Färbevorschrift VII

In 2000 Teile Wasser werden 2 Teile des Farbstoffes von Beispiel 2, 160 Teile Natriumsulfat und als Puffermittel 4 Teile Na₂HPO₄ . 12H₂0 und 1 Teil KH₂P0₄ gegeben, so dass ein Färbebad mit einem pH von 7 erhalten wird. In dieses Bad werden 100 Teil einer Wirkware aus nicht-mercerisierter Baumwolle eingetaucht. Im Laufe von 30 Minuten wird die Temperatur des Bades auf 130°C gebracht, und bei dieser Temperatur wird 60 Minuten lang gefärbt. Danach wird die gefärbte Ware aus dem Bad genommen, mit Wassergewaschen, geseift, wieder mit Wasser gewaschen und getrocknet. Es wird eine tiefrote Färbung erhalten.

### Färbevorschrift VIII

In 2000 Teile Wasser werden 2 Teile des Farbstoffes von Beispiel 2, 2 Teile des bekannten wasserunlöslichen Anthrachinonfarbstoffes der Formel 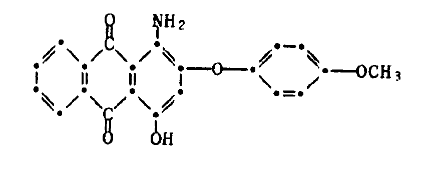 120 Teile Natriumsulfat und als Puffermittel 4 Teile Na2HP04. 12H20 und 1 Teile KH₂P0₄ gegeben. In das so erhaltene Färbebad werden 100 Teile eines Polyester/Baumwoll-Mischgewebes (50 : 50) eingetaucht, und im Laufe von 30 Minuten wird die Temperatur des Bades auf 130°C gebracht, bei welcher 60 Minuten gefärbt wird. Dann wird das gefärbte Gewebe aus dem Bad genommen, mit Wasser gewaschen, geseift, erneut mit Wasser gewaschen und getrocknet. Es wird ein egal rot gefärbtes Gewebe erhalten. Des Färbebad wird vor Beginn und während des Färbens auf pH 7 gehalten.

### Druckvorschrift 1

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 120°C in gesättigtem Dampf. Das bedruckte Gewebe wird dann gespült, gegebenenfalls kochend geseift und nochmals gespült, und anschliessend getrocknet.

### Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teile m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Reaktivfarbstoffe der Formel 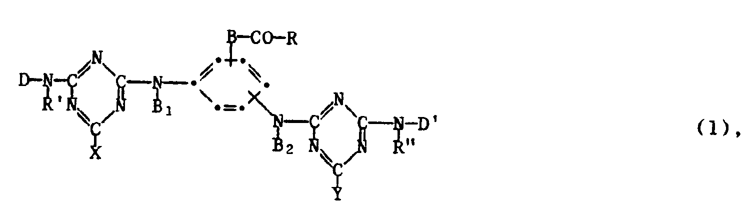 worin D und D' unabhängig voneinander je ein Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon-oder Perylentetracarbimid-Farbstoffes ; R', R", B₁ und B₂ unabhängig voneinander Wasserstoff oder Alkyl mit 1 bis 4 Kohlenstoffatomen, das durch Halogen, Hydroxy, Cyan, C₁-C₄-Alkoxy, C₁₋₄-Alkoxycarbonyl, Carboxy, Sulfamoyl, Sulfo oder Sulfato substituiert sein kann ; X und Y unabhängig voneinander Fluor, Chlor, Brom, Sulfo, C₁₋₄-Alkylsulfonyl oder Phenylsulfonyl ; B eine direkte Bindung oder ein Rest 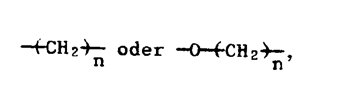 n = 1 bis 6 ; R ein Rest der Formel 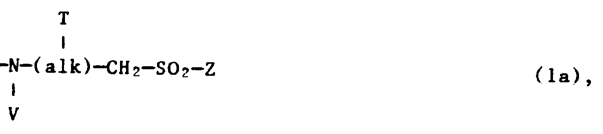 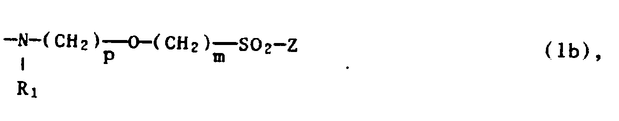 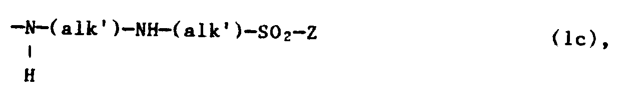 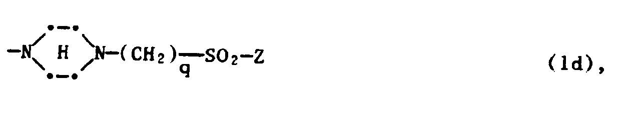 Z ß-Sulfatoäthyl, ß-Thiosulfatoäthyl, β-Phosphatoäthyl, β-Acyloxyäthyl, β-Halogenäthyl oder Vinyl ; alk ein Alkylenrest mit 1 bis 6 C-Atomen oderdessen verzweigte Isomere ; TWasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest―SO₂-Z, worin Z die oben angegebene Bedeutung hat;
VWasserstoff oder ein Alkylrest mit 1 bis 4 C-Atomen, der durch Carboxy- oder Sulfogruppen oder durch deren Derivate, Alkoxygruppen mit 1 oder 2 C-Atomen, Halogen oder Hydroxy substituiert sein kann ; oder ein Rest 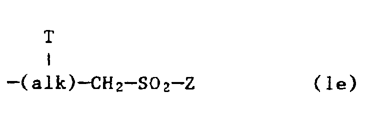 worin Z, alk und T die angegebenen Bedeutungen haben ; R₁ Wasserstoff oder C₁₋₆-Alkyl ; alk' unabhängig voneinander Polymethylenreste mit 2 bis 6 C-Atomen oder deren verzweigte Isomere ; und m = 1 bis 6, p = 1 bis 6 und q = 1 bis 6 ist.

2. Reaktivfarbstoffe gemäss Anspruch 1, worin die Reste D-N(R')- und D'-N(R")- gleich sind.

3. Reaktivfarbstoffe gemäss Anspruch 2, worin X und Y gleich sind, und Chlor oder Fluor bedeuten.

4. Rekativfarbstoffe gemäss Anspruch 3, worin R' und R" Wasserstoff, Methyl oder Aethyl sind.

5. Reaktivfarbstoffe gemäss Anspruch 4, worin B₁ und B₂ Wasserstoff sind.

6. Reaktivfarbstoffe gemäss Anspruch 5, der Formel 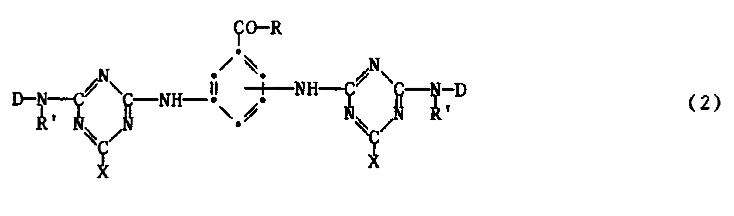 worin D, R', X und R die für Anspruch 5 geltenden Bedeutungen haben.

7. Reaktivfarbstoffe gemäss Anspruch 6, worin D der Rest eines Mono-oder Disazofarbstoffes ist.

8. Reaktivfarbstoffe gemäss Anspruch 6, worin D der Rest eines Metallkomplexazo- oder Formazanfarbstoffes ist.

9. Reaktivfarbstoffe gemäss Anspruch 7, worin D ein Mono- oder Disazofarbstoffrest der Formel 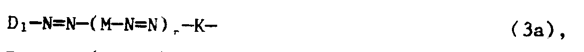 oder 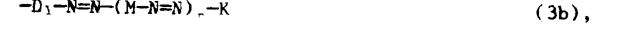 oder eines davon abgeleiteten Metallkomplexes ; D₁ der Rest einer Diazokomponente der Benzol- oder Naphthalinreihe, M der Rest einer Mittelkomponente der Benzol- oder Naphthalinreihe, und K der Rest einer Kupplungskomponente der Benzol-, Naphthalin-, Pyrazolon-, 6-Hydroxypyridon-(2)- oder Acetessigsäurearylamid-Reihe ist, wobei D_{1'} M und K bei Azofarbstoffen übliche Substituenten, insbesondere Hydroxy-, Amino-, Methyl-, Aethyl-, Methoxy- oderAethoxygruppen, gegebenenfalls substituierte Alkanoylaminogruppen mit 2 bis 4 C-Atomen, gegebenenfalls substituierte Benzoylaminogruppen oder Halogenatome, tragen können ; r = 0 oder 1 ist ; und Dᵢ, M und K zusammen mindestens zwei Sulfogruppen, vorzugsweise drei oder vier Sulfogruppen, enthalten.

10. Reaktivfarbstoffe gemäss Anspruch 8, worin D der Rest eines 1 : 1-Kupferkomplexazofarbstoffes der Benzol- oder Naphthalinreihe ist, und das Kupferatom an je eine metallisierbare Gruppe beidseitig in ortho-Stellung zur Azobrücke gebunden ist.

11. Reaktivfarbstoffe gemäss Anspruch 8, worin D der Rest eines Formazanfarbstoffes der Formel 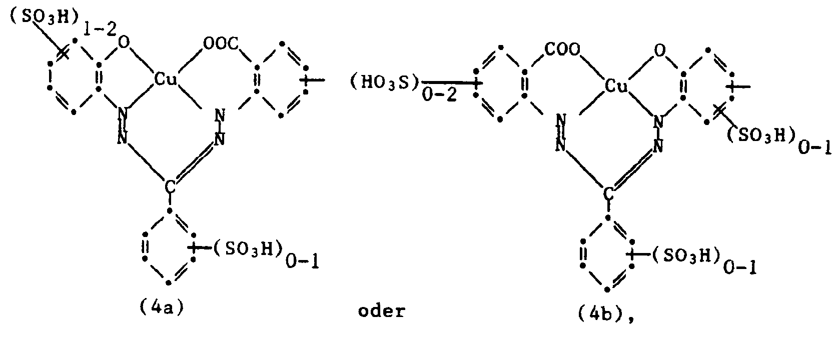 ist, worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen oder Carboxy substituiert sein können ;

12. Reaktivfarbstoffe gemäss Anspruch 9, worin D ein Rest der Formel 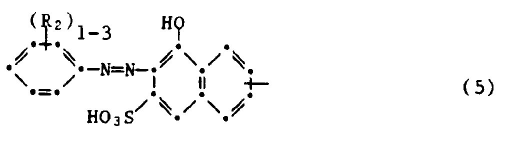 ist, worin R₂ für 1 bis 3 Substituenten aus der Gruppe C₁₋₄-Alkyl, C₁₋₄-Alkoxy, Halogen, Carboxy und Sulfo steht.

13. Reaktivfarbstoffe gemäss Anspruch 9, worin D ein Rest der Formel 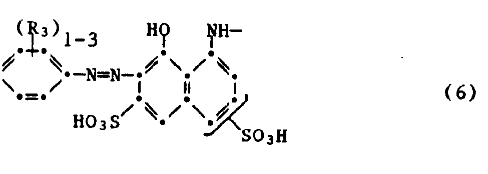 ist, worin R₃ für 1 bis 3 Substituenten aus der Gruppe C₁₋₄-Alkyl, C₁₋₄-Alkoxy, Halogen, Carboxy und Sulfo steht.

14. Reaktivfarbstoffe gemäss Anspruch 9, worin D ein Rest der Formel 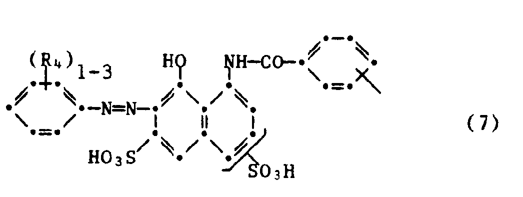 ist, worin R₄ für 1 bis 3 Substituenten aus der Gruppe C₁₋₄-Alkyl, C₁₋₄-Alkoxy, Halogen, Carboxy und Sulfo steht.

15. Reaktivfarbstoffe gemäss Anspruch 9, worin D ein Rest der Formel 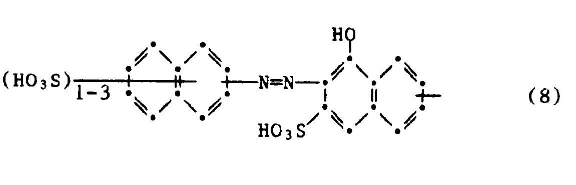 ist.

16. Reaktivfarbstoffe gemäss Anspruch 9, worin D ein Rest der Formel 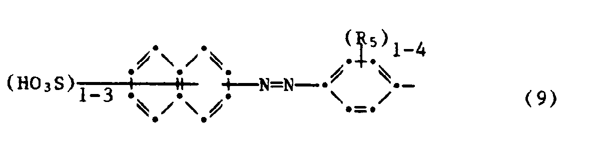 ist, worin R₅ für 1 bis 4 Substituenten aus der Gruppe Wasserstoff, Halogen, Nitro, Cyan, Trifluormethyl, Sulfamoyl, Carbamoyl, C₁₋₄-Alkyl, C₁₋₄-Alkoxy, Amino, Acetylamino, Ureido, Hydroxy, Carboxy, Sulfomethyl und Sulfo unabhängig voneinander, steht.

17. Reaktivfarbstoffe gemäss Anspruch 9, worin D ein Rest der Formel 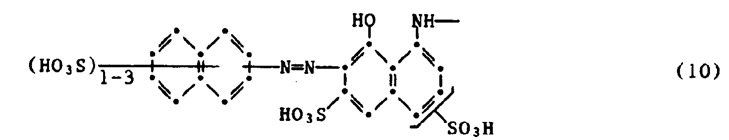 ist.

18. Reaktivfarbstoffe gemäss Anspruch 9, worin D ein Rest der Formel 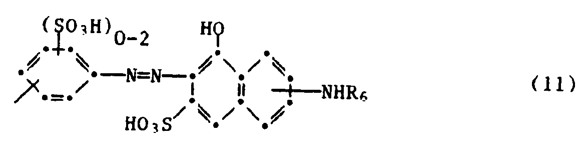 ist, worin R₆ C₁₋₄-Alkanoyl oder Benzoyl ist.

19. Reaktivfarbstoffe gemäss Anspruch 9, worin D ein Rest der Formel 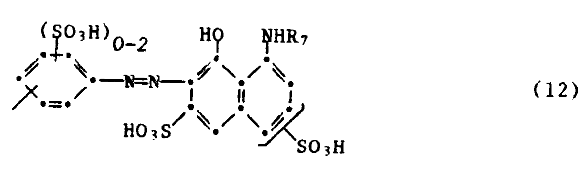 ist, worin R₇ C₁₋₄-Alkanoyl oder Benzoyl ist.

20. Reaktivfarbstoffe gemäss Anspruch 9, worin D ein Rest der Forme 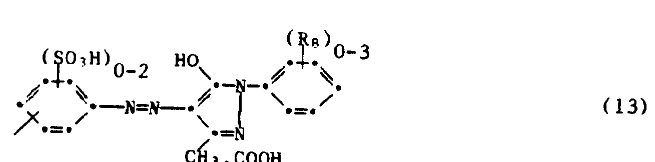 ist, worin R₈ für 0 bis 3 Substituenten aus der Gruppe C₁₋₄-Alkyl, C₁₋₄-Alkoxy, Halogen, Carboxy und Sulfo steht.

21. Reaktivfarbstoffe gemäss Anspruch 9, worin D ein Rest der Formel 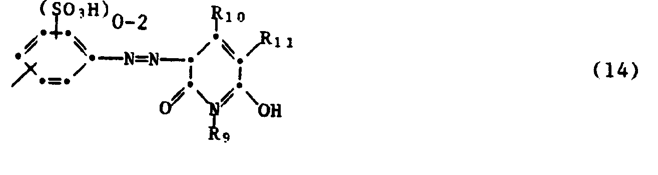 ist, worin R₉ und R₁₀ unabhängig voneinander Wasserstoff, C₁₋₄-Alkyl oder Phenyl, und R₁₁ Wasserstoff, Cyano, Carbamoyl oder Sulfomethyl ist.

22. Reaktivfarbstoffe gemäss Anspruch 9, worin D ein Rest der Formel 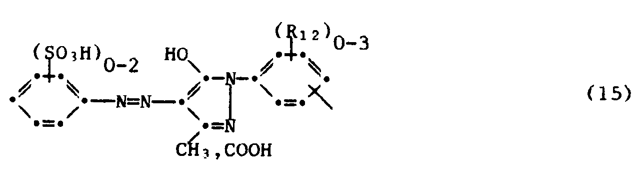 ist, worin R₁₂ für 0 bis 3 Substituenten aus der Gruppe C₁₋₄-Alkyl, C₁₋₄-Alkoxy, Halogen, Carboxy und Sulfo steht.

23. Reaktivfarbstoffe gemäss Anspruch 9, worin D ein Rest der Formel 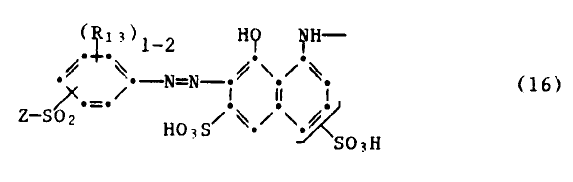 ist, worin R₁₃ für 1 bis 2 Substituenten aus der Gruppe Wasserstoff, C₁₋₄-Alkyl, C₁₋₄-Alkoxy, Halogen, Carboxy und Sulfo steht ; und Z ß-Sulfatoäthyl, β-Thiosulfatoäthyl, β-Phosphatoäthyl, ß-Acyloxyäthyl, β-Halogenäthyl oder Vinyl ist.

24. Reaktivfarbstoffe gemäss Anspruch 9, worin D ein Rest der Formel 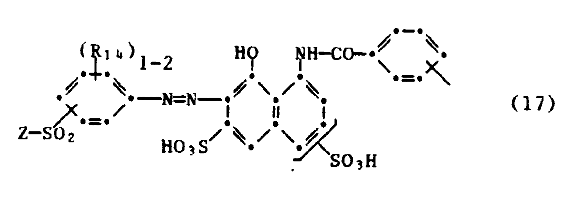 ist, worin R₁₄ für 1 bis 2 Substituenten aus der Gruppe Wasserstoff, C₁₋₄-Alkyl, C₁₋₄-Alkoxy, Halogen, Carboxy und Sulfo steht ; und Z β-Sulfatoäthyl, β-Thiosulfatoäthyl, β-Phosphatoäthyl, β-Acyloxyäthyl, β-Halogenäthyl oder Vinyl ist.

25. Reaktivfarbstoffe gemäss Anspruch 6, worin D ein Rest der Formel 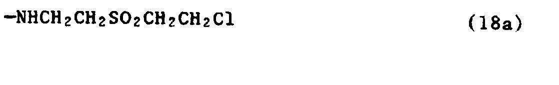 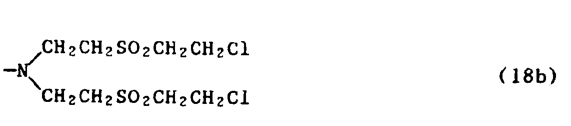 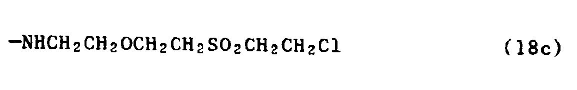 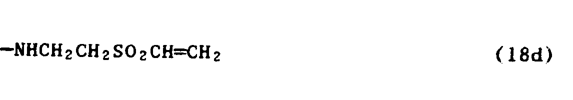 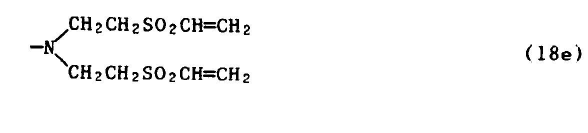 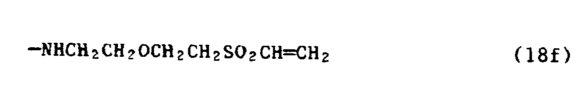 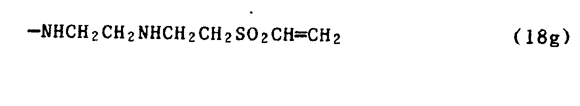 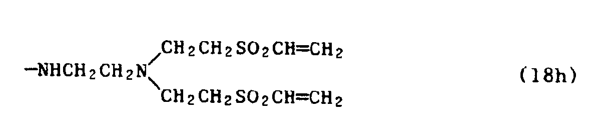 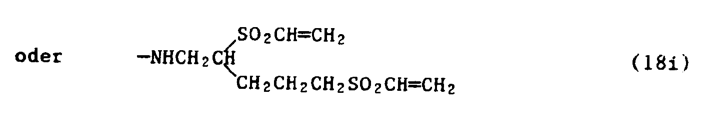 ist.

26. Verfahren zur Herstellung von Reaktivfarbstoffen der Formel (1), dadurch gekennzeichnet, dass man einen organischen Farbstoff der Formel 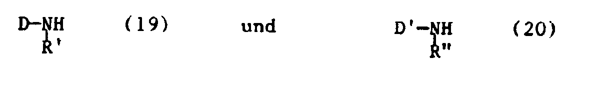 oder ein Farbstoffvorprodukt, je ein Aequivalent eines s-Triazins der Formel 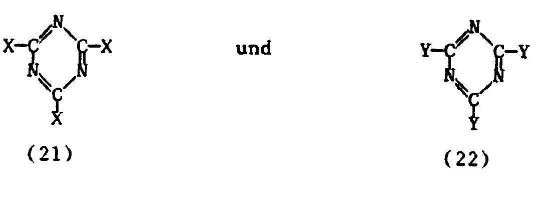 und ein Aequivalent eines Diamins der Formel 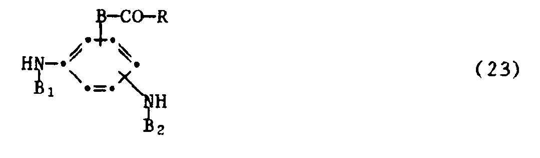 in beliebiger Folge miteinander umsetzt, wobei D, D', R', R", X, Y, Bₗ, B₂, B und R die in Anspruch 1 angegebenen Bedeutungen haben, oder, im Falle der Verwendung von Farbstoffvorprodukten, die erhaltenen Zwischenprodukte in die gewünschten Monohalogentriazinfarbstoffe überführt und gegebenenfalls eine weitere Umwandlungsreaktion anschliesst.

27. Verfahren gemäss Anspruch 26, dadurch gekennzeichnet, dass man einen Farbstoff der Formel 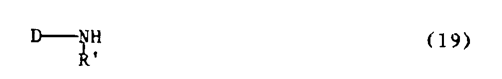 zunächst mit einem s-Triazin der Formel 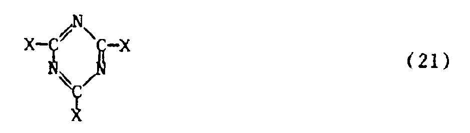 kondensiert, und die erhaltene Verbindung der Formel N. 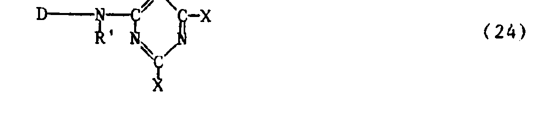 anschliessend mit einem Diamin der Formel 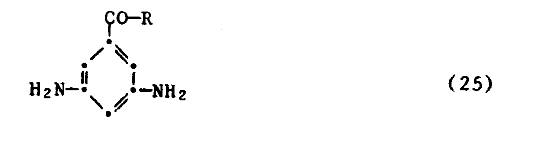 im molaren Verhältnis 2 : 1 kondensiert.

28. Verfahren gemäss Anspruch 26, dadurch gekennzeichnet, dass man eine Komponente des Farbstoffs der Formel (1), die einen Rest der Formel 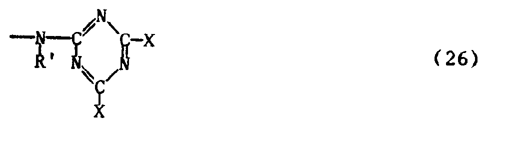 enthält, worin R' und X die in Anspruch 26 angegebenen Bedeutungen haben, mit einer zur Herstellung des Farbstoffs benötigten zweiten Komponente, die gegebenenfalls einen Rest der Formel (26) enthält, umsetzt, und den so erhaltenen Farbstoff der Formel 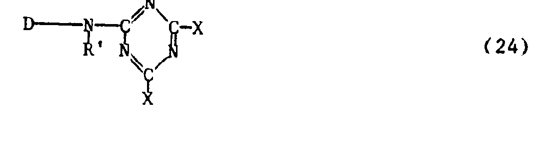 mit einem Diamin der Formel (25) im molaren Verhältnis 2 : 1 kondensiert.

29. Verwendung der Reaktivfarbstoffe gemäss Anspruch 1, zum Färben oder Bedrucken von cellulosehaltigen Fasernmaterialien.

30. Verwendung gemäss Anspruch 29, zum Färben oder Bedrucken von Baumwolle.

## Claims

1. A reactive dye of the formula 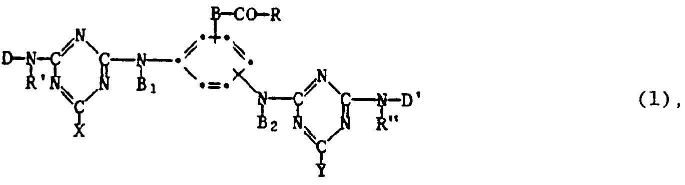 in which D and D' are each independently of the other a radical of a monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide dye, R', R", B₁ and B₂ are independently of each other hydrogen or alkyl which has 1 to 4 carbon atoms and which can be substituted by halogen, hydroxyl, cyano, C₁-C₄alkoxy, C₁₋₄alkoxycarbonyl, carboxyl, sulfamoyl, sulfo or sulfato, X and Y are independently of each other fluorine, chlorine, bromine, sulfo, C₁₋₄alkylsulfonyl or phenylsulfonyl, B is a direct bond or a radical 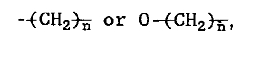 n is 1 to 6, R is a radical of the formula 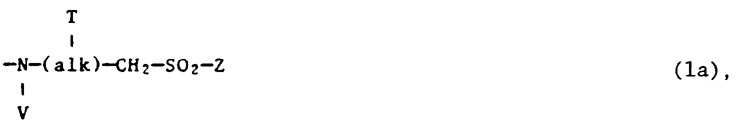 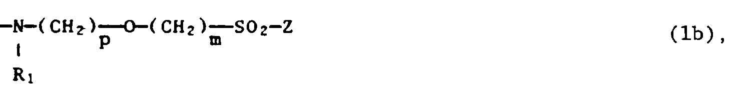 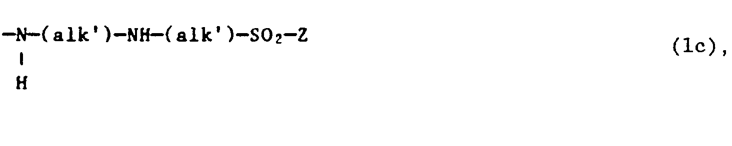 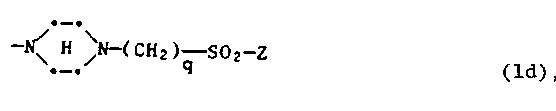 Z is β-sulfatoethyl, β-thiosulfatoethyl, ß-phosphatoethyl, β-acyloxyethyl, β-haloethyl or vinyl, alk is an alkylene radical having 1 to 6 C atoms or a branched isomer thereof, T is hydrogen, chlorine, bromine, fluorine, hydroxyl, sulfato, acyloxy having 1 to 4 C atoms, cyano, carboxyl, alkoxycarbonyl having 1 to 5 C atoms, carbamoyl or a radical ―SO₂-Z in which Z is as defined above, V is hydrogen or an alkyl radical which has 1 to 4 C atoms and can be substituted by carboxyl or sulfo groups or by derivatives thereof, or by alkoxy groups having 1 or 2 C atoms, halogen or hydroxyl, or a radical 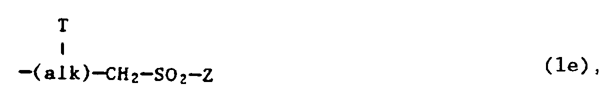 in which Z, alk and T are as defined above, R₁ is hydrogen or C₁₋₆alkyl, each alk' is independently of the other one a polymethylene radical having 2 to 6 C atoms or a branched isomer thereof, and m is 1 to 6, p is 1 to 6 and q is 1 to 6.

2. A reactive dye according to claim 1, in which the radicals D-N(R')―and D'-N(R")- are identical.

3. A reactive dye according to claim 2, in which X and Y are identical and are chlorine or fluorine.

4. A reactive dye according to claim 3, in which R' and R" are hydrogen, methyl or ethyl.

5. A reactive dye according to claim 4, in which B₁ and B₂ are hydrogen.

6. A reactive dye according to claim 5, of the formula 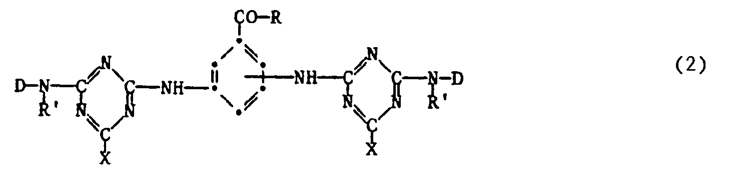 in which D, R', X and R are as defined in claim 5.

7. A reactive dye according to claim 6, in which D is the radical of a monoazo or disazo dye.

8. A reactive dye according to claim 6, in which D is the radical of a metal complex azo or formazan dye.

9. A reactive dye according to claim 7, in which D is a monoazo or disazo dye of the formula 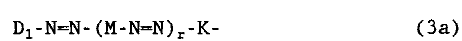 or 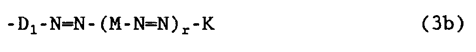 or of a metal complex derived therefrom, D₁ is the radical of a diazo component of the benzene or naphthalene series, M is the radical of a middle component of the benzene or naphthalene series, and K is the radical of a coupling component of the benzene, naphthalene, pyrazolone, 6-hydroxy-2-pyridone or N-arylacetoacetamide series, where Dₗ, M and K can carry substituents customary with azo dyes, in particular hydroxyl, amino, methyl, ethyl, methoxy or ethoxy groups, substituted or unsubstituted alkanoylamino groups having 2 to 4 C atoms, substituted or unsubstituted benzoylamino groups or halogen atoms, r is 0 or 1, and Dₗ, M and K together contain at least two sulfo groups, preferably three or four sulfo groups.

10. A reactive dye according to claim 8, in which D is the radical of a 1 : 1 copper complex azo dye of the benzene or naphthalene series and the copper atom is bonded on each side to a metallisable group in the orthoposition relative to the azo bridge.

11. A reactive dye according to claim 8, in which D is the radical of a formazan dye of the formula 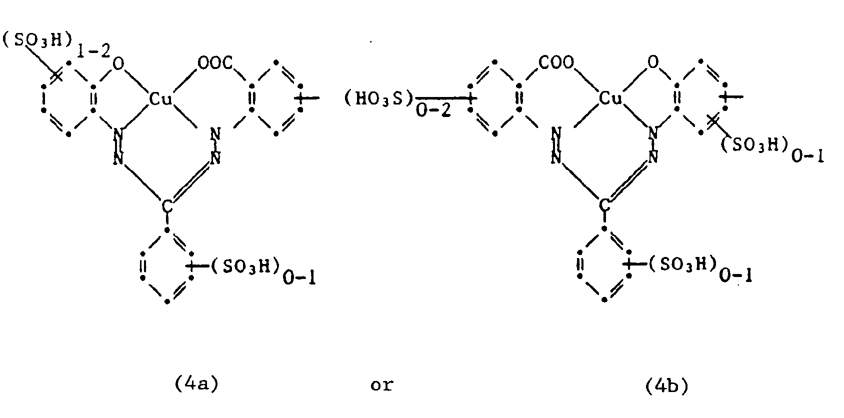 in which the benzene nuclei can be further substituted by alkyl having 1 to 4 C atoms, alkoxy having 1 to 4 C atoms, alkylsulfonyl having 1 to 4 C atoms, halogen or carboxyl.

12. A reactive dye according to claim 9, in which D is a radical of the formula 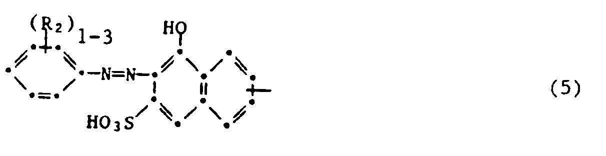 in which R₂ is 1 to 3 substituents from the group consisting of C₁₋₄alkyl, C₁₋₄alkoxy, halogen, carboxyl and sulfo.

13. A reactive dye according to claim 9, in which D is a radical of the formula 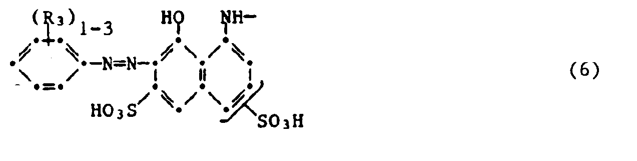 in which R₃ is 1 to 3 substituents from the group consisting of C₁₋₄alkyl, C₁₋₄alkoxy, halogen, carboxyl and sulfo.

14. A reactive dye according to claim 9, in which D is a radical of the formula 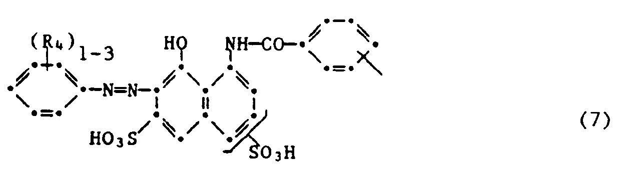 in which R₄ is 1 to 3 substituents from the group consisting of C₁₋₄alkyl, C₁₋₄alkoxy, halogen, carboxyl and sulfo.

15. A reactive dye according to claim 9, in which D is a radical of the formula

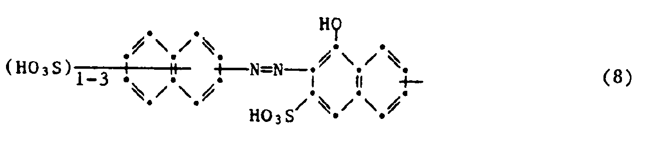

16. A reactive dye according to claim 9, in which D is a radical of the formula 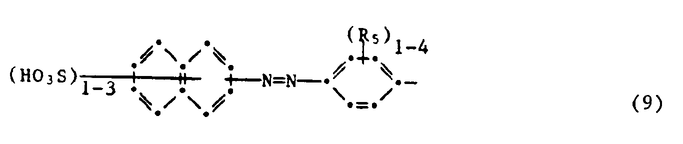 in which R₅ is 1 to 4 independently selected substituents from the group consisting of hydrogen, halogen, nitro, cyano, trifluoromethyl, sulfamoyl, carbamoyl, C₁₋₄alkyl, C₁₋₄alkoxy, amino, acetylamino, ureido, hydroxyl, carboxyl, sulfomethyl and sulfo.

17. A reactive dye according to claim 9, in which D is a radical of the formula

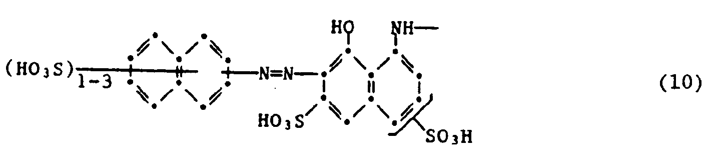

18. A reactive dye according to claim 9, in which D is a radical of the formula 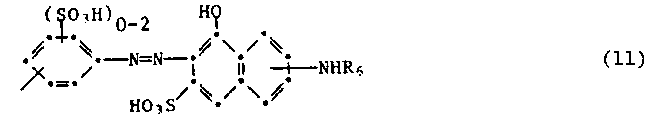 in which R₆ is C₁₋₄alkanoyl or benzoyl.

19. A reactive dye according to claim 9, in which D is a radical of the formula 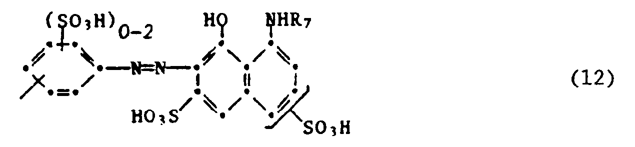 in which Rᵣ is C₁₋₄alkanoyl or benzoyl.

20. A reactive dye according to claim 9, in which D is a radical of the formula 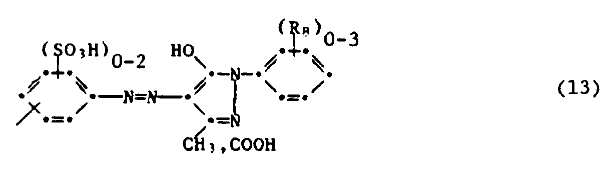 in which R₈ is 0 to 3 substituents from the group consisting of C₁₋₄alkyl, C₁₋₄alkoxy, halogen, carboxyl and sulfo.

21. A reactive dye according to claim 9, in which D is a radical of the formula 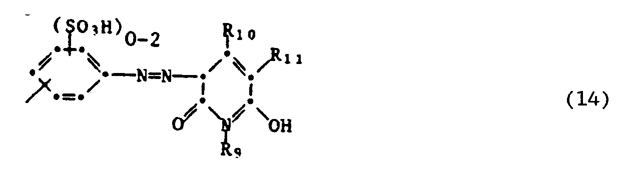 in which Rg and R₁₀ are independently of each other hydrogen, C₁₋₄alkyl or phenyl, and R₁₁ is hydrogen, cyano, carbamoyl or sulfomethyl.

22. A reactive dye according to claim 9, in which D is a radical of the formula 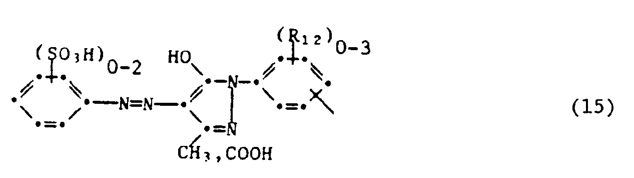 in which R₁₂ is 0 to 3 substituents from the group consisting of C₁₋₄alkyl, C₁₋₄alkoxy, halogen, carboxyl and sulfo.

23. A reactive dye according to claim 9, in which D is a radical of the formula 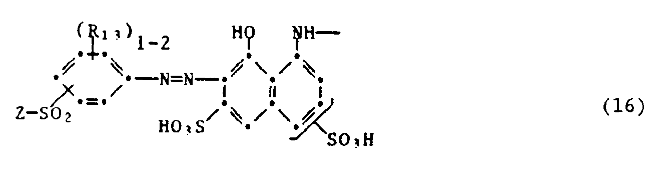 in which R₁₃ is 1 or 2 substituents from the group consisting of hydrogen, C₁₋₄alkyl, C₁₋₄alkoxy, halogen, carboxyl and sulfo, and Z is β-sulfatoethyl, β-thiosulfatoethyl, ß-phosphatoethyl, β-acyloxyethyl, β-haloethyl or vinyl.

24. A reactive dye according to claim 9, in which D is a radical of the formula 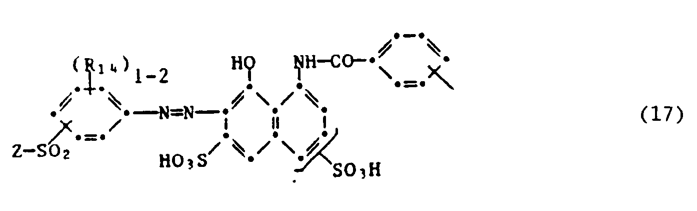 in which R₁₄ is 1 or 2 substituents from the group consisting of hydrogen, C₁₋₄alkyl, C₁₋₄alkoxy, halogen, carboxyl and sulfo, and Z is β-sulfatoethyl, β-thiosulfatoethyl, β-phosphatoethyl, β-acyloxyethyl, β-haloethyl or vinyl.

25. A reactive dye according to claim 6, in which R is a radical of the formula 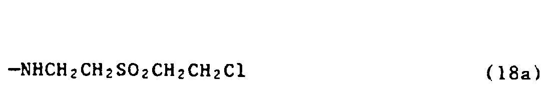 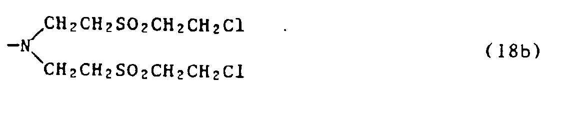 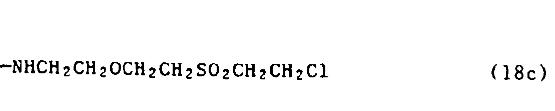 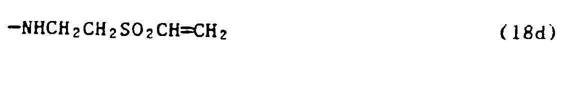 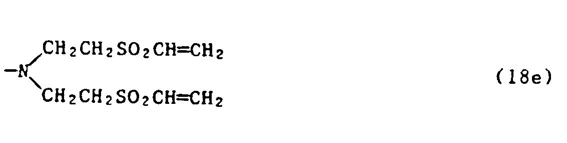 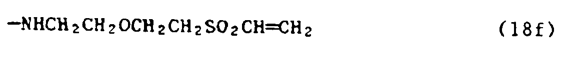 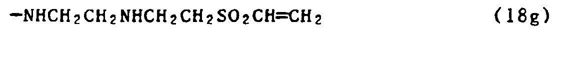 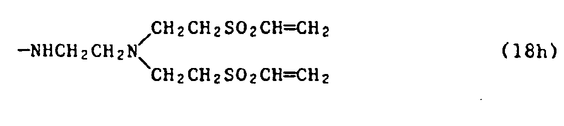 or

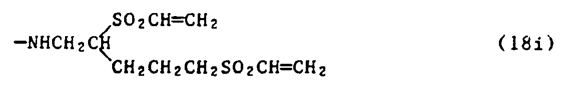

26. A process for preparing a reactive dye of the formula (1), which comprises reacting an organic dye of the formula 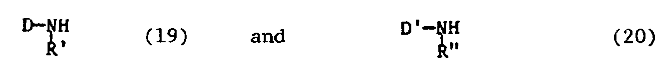 or a dye precursor, one equivalent each of an s-triazine of the formula 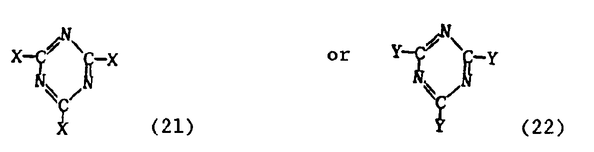 and one equivalent of a diamine of the formula 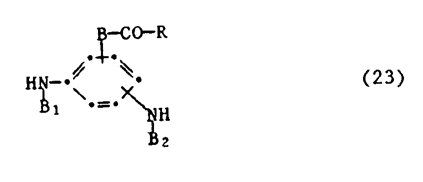 with one another in any desired order, D, D', R', R", X, Y, B_{1'} B₂, B and R being as defined in claim 1, or, if dye precursors are used, converting the intermediates obtained into the desired monohalotriazine dyes and, if desired, following up with a further conversion reaction.

27. A process according to claim 26, wherein first a dye of the formula 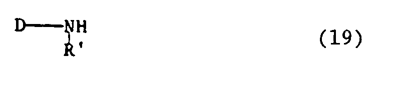 is condensed with an s-triazine of the formula 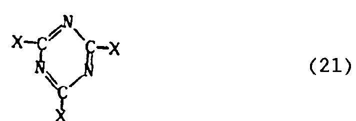 and then the compound obtained of the formula 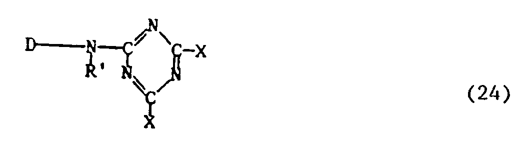 is condensed with a diamine of the formula 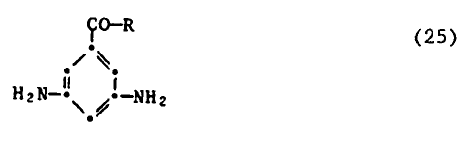 in a molar ratio 2 : 1.

28. A process according to claim 26, wherein a component of the dye of the formula (1) which contains a radical of the formula 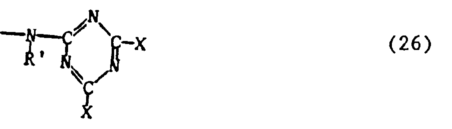 in which R' and X are as defined in claim 26, is reacted with a second component required for preparing the dye, which can if desired contain a radical of the formula (26), and the resulting dye of the formula 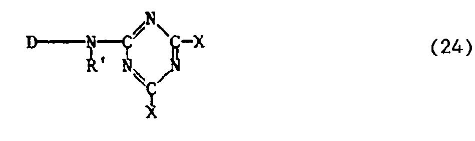 is condensed with a diamine of the formula (25) in a molar ratio of 2 : 1.

29. Use of a reactive dye according to claim 1 for dyeing or printing cellulose-containing fibre materials.

30. Use according to claim 29 for dyeing or printing cotton.

## Revendications

1. Colorants réactifs de formule 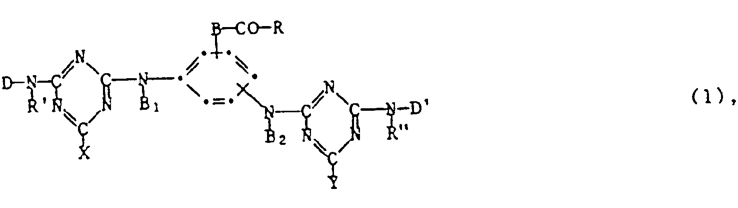 dans laquelle D et D' représentent chacun, indépendamment l'un de l'autre, un reste d'un colorant monoazoï- que, polyazoïque, azoïque à complexe métallique, anthraquinonique, phtalocyanine, formazan, azométhine, dioxazine, phénazine, stilbène, triphénylméthane, xanthène, thioxanthone, nitroaryle, naphtoquinonique, pyrè- nequinonique ou pérylènetétracarbimide ; R', R", B₁ et B₂ représentent, indépendamment les uns des autres, un atome d'hydrogène ou un radical alkyle ayant de 1 à 4 atomes de carbone, qui peut être substitué par un atome d'halogène ou par un groupe hydroxy, cyano, alcoxy en Cq-C₄, alcoxy(C₁₋₄)-carbonyle, carboxy, sulfamoyle, sulfo ou sulfato ; X et Y représentent, indépendamment l'un de l'autre, un atome de fluor, chlore ou brome ou un groupe sulfo, alkyl(C₁₋₄)-sulfonyle ou phénylsulfonyle ; B représente une liaison directe ou un radical ―(CH₂)-ₙ ou―O-(CH₂)ₙ, n valant de 1 à 6 ; R représente un radical de formule 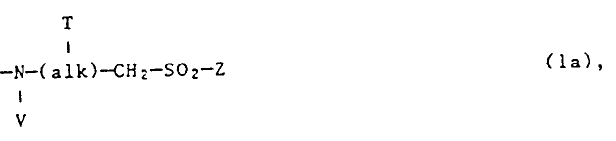 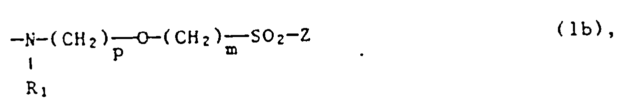 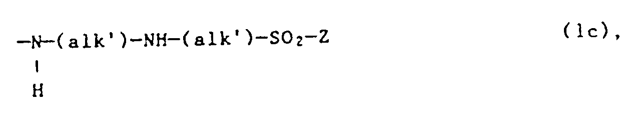 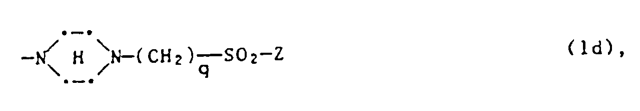 Z représentant un groupe β-sulfatoéthyle, β-thiosulfatoéthyle, β-phosphatoéthyle, β-acyloxyéthyle, β-halogé- noéthyle ou vinyle ; alk représentant un radical alkylène ayant de 1 à 6 atomes de carbone ou ses isomères ramifiés ; T étant un atome d'hydrogène, de chlore, de brome ou de fluor, ou un radical hydroxy, sulfato, acyloxy ayant de 1 à 4 atomes de carbone, cyano, carboxy, alcoxycarbonyle ayant de 1 à 5 atomes de carbone, carbamoyle, ou un radical ―SO₂-Z, dans lequel Z a la signification donnée plus haut ; V représentant un atome d'hydrogène ou un radical alkyle ayant de 1 à 4 atomes de carbone, qui peut être substitué par des groupes carboxy ou sulfo ou par des dérivés de ceux-ci, par des groupes alcoxy ayant 1 ou 2 atomes de carbone, par des atomes d'halogène ou par le groupe hydroxy ; ou un radical 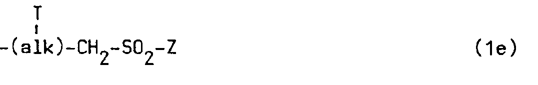 dans lequel Z, alk et T ont les significations données ; R₁ représentant un atome d'hydrogène ou un groupe alkyle en C₁₋₆ ; les radicaux alk' représentant, indépendamment l'un de l'autre, des radicaux polyméthylène ayant de 2 à 6 atomes de carbone ou leurs isomères ramifiés ; m valant de 1 à 6, p valant de 1 à 6 et q valant de 1 à 6.

2. Colorants réactifs selon la revendication 1, dans lesquels les radicaux D-N(R')―et D'-N(R")―sont identiques.

3. Colorants réactifs selon la revendication 2, dans lesquels X et Y sont identiques et représentent des atomes de chlore ou de fluor.

4. Colorants réactifs selon la revendication 3, dans lesquels R' et R" sont des atomes d'hydrogène ou le groupe méthyle ou éthyle.

5. Colorants réactifs selon la revendication 4, dans lesquels B₁ et B₂ sont des atomes d'hydrogène.

6. Colorants réactifs selon la revendication 5, de formule 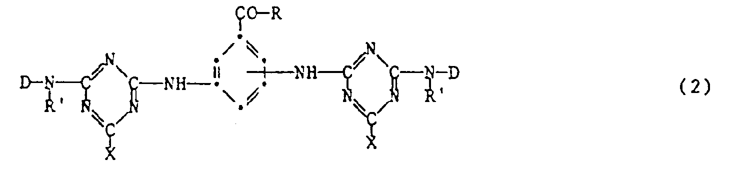 dans laquelle D, R', X et R ont les significations valables pour la revendication 5.

7. Colorants réactifs selon la revendication 6, dans lesquels D est le reste d'un colorant mono- ou disazoïque.

8. Colorants réactifs selon la revendication 6, dans lesquels D est le reste d'un colorant azoïque à complexe métallique ou formazan.

9. Colorants réactifs selon la revendication 7, dans lesquels D est un reste de colorant mono- ou disazoïque de formule 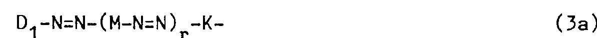 ou 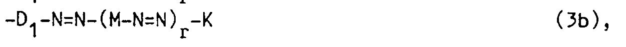 ou d'un complexe métallique dérivé de celui-ci ; D₁ est le reste d'un composant diazotable de la série du benzène ou du naphtalène, M est le reste d'un composant central de la série du benzène ou du naphtalène, et K est le reste d'un copulant de la série benzénique, naphtalénique, pyrazolone, 6-hydroxypyridone-(2) ou acé- tacétarylamide, Dₗ, M et K pouvant porter des substituants usuels dans des colorants azoïques, en particulier des groupes hydroxy, amino, méthyle, éthyle, méthoxy ou éthoxy, des groupes alcanoylamino éventuellement substitués ayant de 2 à 4 atomes de carbone, des groupes benzoylamino éventuellement substitués ou des atomes d'halogène ; r vaut zéro ou 1 ; et Dₗ, M et K contiennent ensemble au moins deux groupes sulfo, de préférence trois ou quatre groupes sulfo.

10. Colorants réactifs selon la revendication 8, dans lesquels D est le reste d'un colorant azoïque de la série du benzène ou du naphtalène, à complexe de cuivre 1 : 1, et l'atome de cuivre est lié de chacun des deux côtés à un groupe métallable en position ortho par rapport au pont azoïque.

11. Colorants réactifs selon la revendication 8, dans lesquels D est le reste d'un colorant formazan de formule 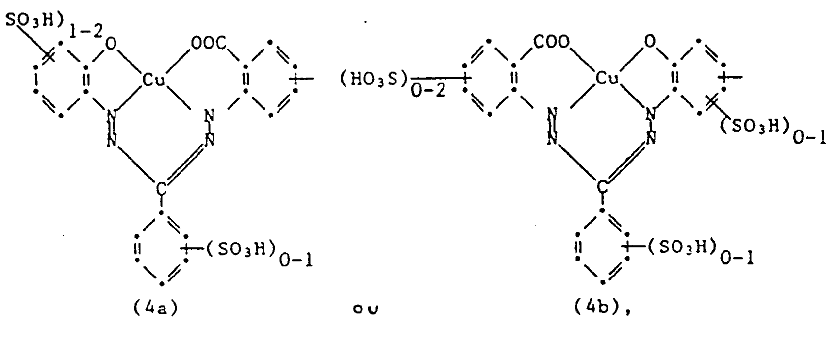 dans laquelle les noyaux benzéniques peuvent être substitués en outre par des atomes d'halogène ou des groupes alkyle ayant de 1 à 4 atomes de carbone, alcoxy ayant de 1 à 4 atomes de carbone, alkylsulfonyle ayant de 1 à 4 atomes de carbone ou carboxy.

12. Colorants réactifs selon la revendication 9, dans lesquels D est un reste de formule 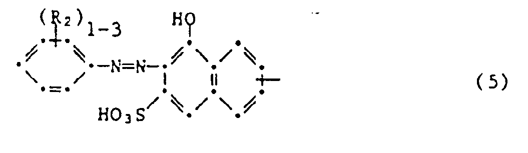 dans laquelle R₂ représente de 1 à 3 substituants choisis parmi des atomes d'halogène et des groupes alkyle en C₁₋₄, alcoxy en C₁₋₄, carboxy et sulfo.

13. Colorants réactifs selon la revendication 9, dans lesquels D est un radical de formule 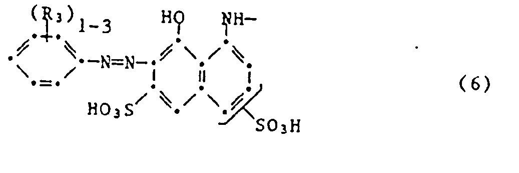 dans laquelle R₃ représente de 1 à 3 substituants choisis parmi des atomes d'halogène et des groupes alkyle en C₁₋₄, alcoxy en C₁₋₄, carboxy et sulfo.

14. Colorants réactifs selon la revendication 9, dans lesquels D est un radical de formule 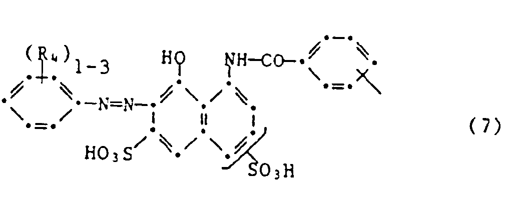 dans laquelle R₄ représente de 1 à 3 substituants choisis parmi des atomes d'halogène et des groupes alkyle en C₁₋₄, alcoxy en C₁₋₄, carboxy et sulfo.

15. Colorants réactifs selon la revendication 9, dans lesquels D est un radical de formule

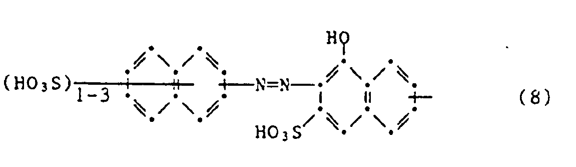

16. Colorants réactifs selon la revendication 9, dans lesquels D est un radical de formule 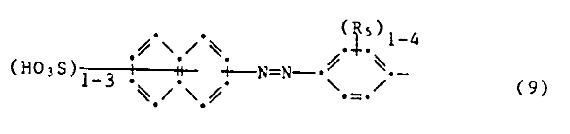 dans laquelle R₅ représente de 1 à 4 substituants choisis, indépendamment les uns des autres, parmi des atomes d'hydrogène et d'halogène et des groupes nitro, cyano, trifluorométhyle, sulfamoyle, carbamoyle, alkyle en C₁₋₄, alcoxy en C₁₋₄, amino, acétylamino, uréido, hydroxy, carboxy, sulfométhyle et sulfo.

17. Colorants réactifs selon la revendication 9, dans lesquels D est un radical de formule

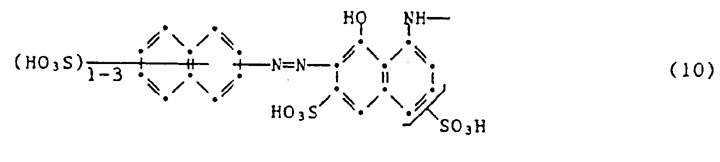

18. Colorants réactifs selon la revendication 9, dans lesquels D est un radical de formule 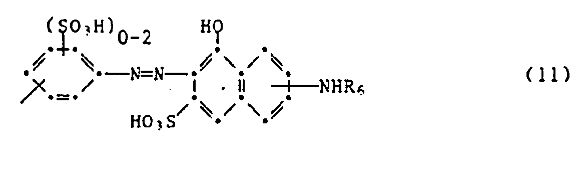 dans laquelle R₆ est un groupe alcanoyle en C₁₋₄ ou benzoyle.

19. Colorants réactifs selon la revendication 9, dans lesquels D est un radical de formule 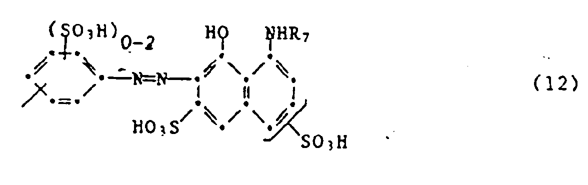 dans laquelle R₇ est un groupe alcanoyle en C₁₋₄ ou benzoyle.

20. Colorants réactifs selon la revendication 9, dans lesquels D est un radical de formule 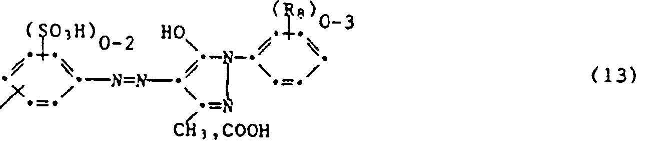 dans laquelle R₈ représente de zéro à 3 substituants choisis parmi des atomes d'halogène et des groupes alkyle en C₁₋₄, alcoxy en C₁₋₄, carboxy et sulfo.

21. Colorants réactifs selon la revendication 9, dans lesquels D est un radical de formule 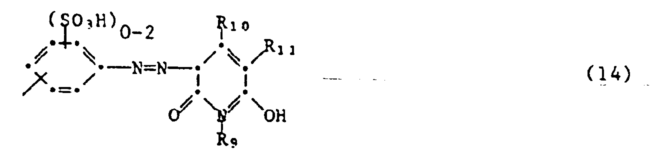 dans laquelle Rg et R₁₀ sont, indépendamment l'un de l'autre, un atome d'hydrogène ou un groupe alkyle en C₁₋₄ ou phényle, et R₁₁ est un atome d'hydrogène ou le groupe cyano, carbamoyle ou sulfométhyle.

22. Colorants réactifs selon la revendication 9, dans lesquels D est un radical de formule 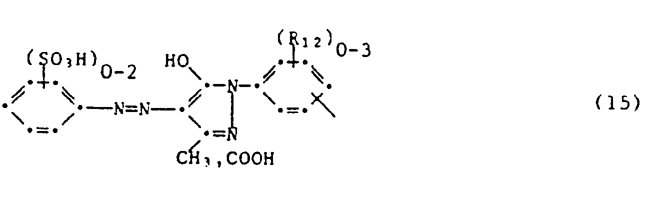 dans laquelle R₁₂ représente de zéro à 3 substituants choisis parmi des atomes d'halogène et des groupes alkyle en C₁₋₄, alcoxy en C₁₋₄, carboxy et sulfo.

23. Colorants réactifs selon la revendication 9, dans lesquels D est un radical de formule 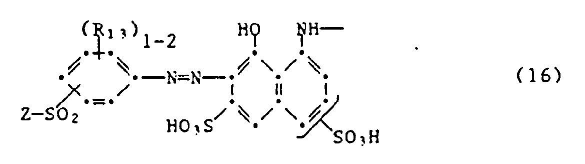 dans laquelle R₁₃ représente un ou deux substituants choisis parmi des atomes d'hydrogène ou d'halogène et des groupes alkyle en C₁₋₄, alcoxy en C₁₋₄, carboxy et sulfo ; et Z est le groupe β-sulfatoéthyle, β-thiosulfatoé- thyle, β-phosphatoéthyle, β-acyloxyéthyle, β-halogénoéthyle ou vinyle.

24. Colorants réactifs selon la revendication 9, dans lesquels D est un radical de formule 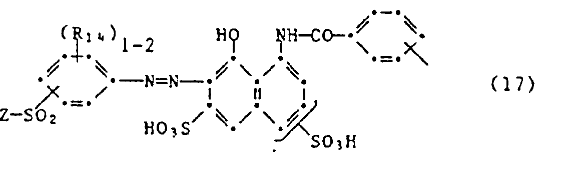 dans laquelle R₁₄ représente un ou deux substituants choisis parmi des atomes d'hydrogène ou d'halogène et des groupes alkyle en C₁₋₄, alcoxy en C₁₋₄, carboxy et sulfo ; et Z est le groupe β-sulfatoéthyle, β-thiosulfatoé- thyle, β-phosphatoéthyle, β-acyloxyéthyle, β-halogénoéthyle ou vinyle.

25. Colorants réactifs selon la revendication 6, dans lesquels R est un radical de formule

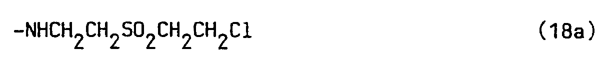

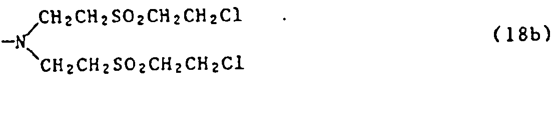

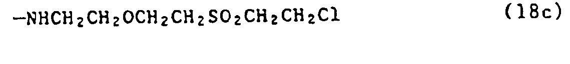

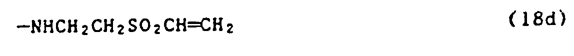

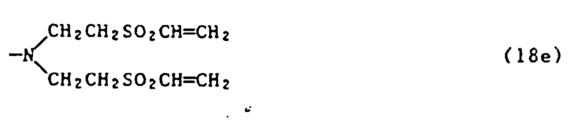

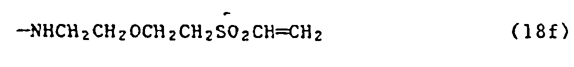

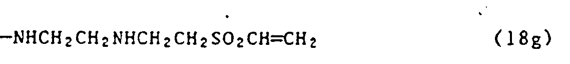

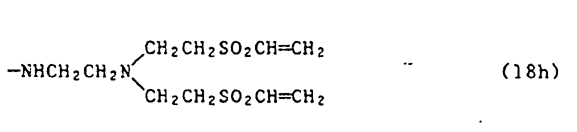

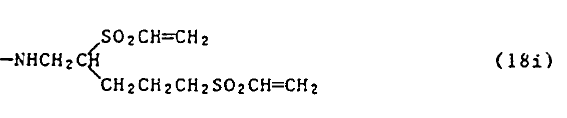

26. Procédé pour la préparation de colorants réactifs de formule (1), caractérisé en ce que l'on fait réagir l'un avec l'autre, en un ordre quelconque, un colorant réactif de formule 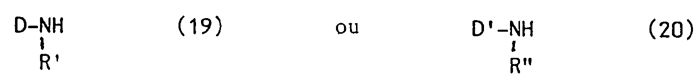 ou un précurseur de colorant, avec chacun un équivalent d'une triazine s de formule 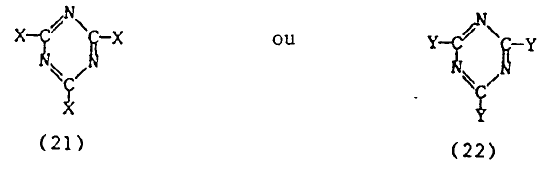 et un équivalent d'une diamine de formule 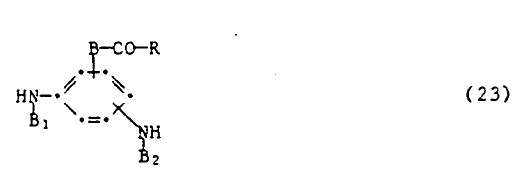 D, D', R, R", X, Y, B_{1'} B₂, B et R ayant les significations données dans la revendication 1, ou, dans le cas de l'utilisation de précurseurs de colorants, on convertit les produits intermédiaires obtenus en les colorants mono- halogénotriazine recherchés, et éventuellement à cela fait suite une autre réaction de conversion.

27. Procédé selon la revendication 26, caractérisé en ce que l'on condense d'abord un colorant de formule 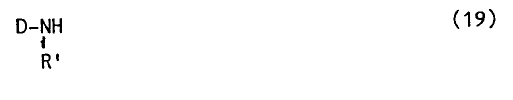 avec une triazine s de formule 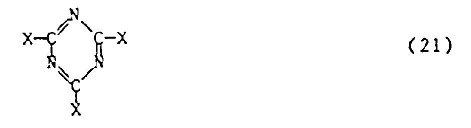 et ensuite on condense le composé obtenu de formule 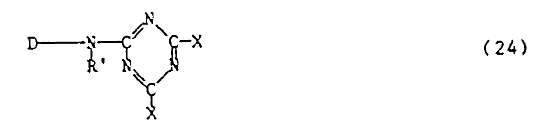 avec une diamine de formule 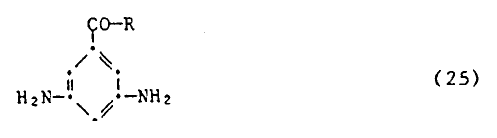 dans le rapport molaire 2 : 1.

28. Procédé selon la revendication 26, caractérisé en ce que l'on fait réagir un composant du colorant de formule (1), qui contient un radical de formule 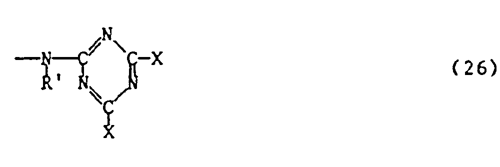 dans laquelle R' et X ont les significations indiquées dans la revendication 26, avec un second composant, requis pour la préparation du colorant, qui éventuellement contient un radical de formule (26), et on condense le colorant de formule 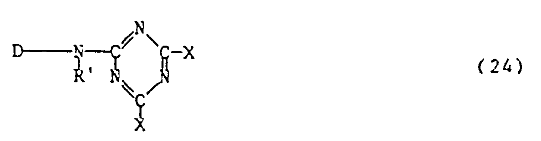 ainsi obtenu avec une diamine de formule (25), en rapport molaire 2 : 1.

29. Utilisation des colorants réactifs selon la revendication 1, pour la teinture ou l'impression de matériaux fibreux cellulosiques.

30. Utilisation selon la revendication 29, pour la teinture ou l'impression du coton.
